# EUROPEAN PATENT SPECIFICATION

(11) **EP 3 165 042 B1**
(45) Date of publication and mention of the grant of the patent: **22.04.2020**
(21) Application number: 14896438.0
(22) Date of filing: 04.07.2014
(51) Int. Cl.: H04W 56/00, H04W 72/04, H04W 84/04

(54) **A METHOD FOR ASSISTING A WIRELESS DEVICE TO PERFORM UPLINK TRANSMISSIONS**
VERFAHREN ZUR UNTERSTÜTZUNG EINER DRAHTLOSEN VORRICHTUNG BEI DER DURCHFÜHRUNG VON UPLINK-ÜBERTRAGUNGEN
PROCÉDÉ D'ASSISTANCE D'UN DISPOSITIF SANS FIL POUR LA MISE EN OEUVRE DE TRANSMISSIONS EN LIAISON MONTANTE

(43) Date of publication of application: 10.05.2017
(73) Proprietor: Telefonaktiebolaget LM Ericsson (publ), 164 83 Stockholm (SE)
(72) Inventor: RUNE, Johan, S-181 29 Lidingö (SE); BERGSTRÖM, Mattias, S-120 71 Stockholm (SE)
(74) Representative: Zacco Sweden AB
(86) International application number: PCT/SE2014/050858
(87) International publication number: WO 2016/003342

(56) References cited:
- EP-A2- 2 733 874
- WO-A1-2013/020209
- US-A1- 2011 223 900
- US-A1- 2012 014 371
- US-A1- 2012 281 680
- US-A1- 2013 028 204
- US-A1- 2013 244 719
- '3rd Generation Partnership Project; Technical Specification Group Radio Access Network; Study on Small Cell enhancements for E- UTRA and E-UTRAN; Higher layer aspects;' 3GPP TR 36.842 V12.0.0, [Online] December 2013, XP055250865 Retrieved from the Internet: <URL:http://www.3gpp.org/dynareport/36842.h tm>

## Description

### TECHNICAL FIELD

Embodiments herein relate generally to a first Radio Network Node (RNN), a second RNN, a wireless device, and methods therein. In particular they relate to assisting the wireless device to perform an uplink transmission to the second RNN.

### BACKGROUND

Communication devices such as terminals are also known as e.g. User Equipments (UE), mobile terminals, mobile devices, wireless devices, wireless terminals and/or mobile stations. Terminals are enabled to communicate wirelessly in a cellular communications network or wireless communication system, sometimes also referred to as a cellular radio system or cellular networks. The communication may be performed e.g. between two terminals, between a terminal and a regular telephone and/or between a terminal and a server via a Radio Access Network (RAN) and possibly one or more core networks, comprised within the cellular communications network.

Terminals may further be referred to as mobile telephones, smartphones, cellular telephones, laptops, surf plates or tablets with wireless capability, just to mention some further examples. The terminals in the present context may be, for example, portable, pocket-storable, hand-held, computer-comprised, or vehicle-mounted mobile devices, enabled to communicate voice and/or data, via the RAN, with another entity, such as another terminal or a server.

The cellular communications network covers a geographical area which is divided into cell areas, wherein each cell area being served by an access node such as a base station, e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. However, the site of the base station and the site of its connected antenna/antennae, which represent(s) the network's point of transmission and reception of radio signals in the cell may be different. One base station, situated on the base station site, may serve one or several cells. Further, each base station may support one or several communication technologies. The base stations communicate over the air interface operating on radio frequencies with the terminals within range of the base stations. In the context of this disclosure, the expression Downlink (DL) is used for the transmission path from the base station to the mobile station. The expression Uplink (UL) is used for the transmission path in the opposite direction i.e. from the mobile station to the base station.

In 3rd Generation Partnership Project (3GPP) Long Term Evolution (LTE), base stations, which may be referred to as eNodeBs or even eNBs, may be directly connected to one or more core networks.

3GPP LTE radio access standard has been written in order to support high bitrates and low latency both for uplink and downlink traffic. All data transmission is in LTE controlled by the radio base station.

With the proliferation of user friendly smartphones and tablets, the usage of high data rate services such as video streaming over the wireless communications network is becoming commonplace, greatly increasing the amount of traffic in the wireless communications networks. Thus, there is a great urgency in the wireless communications network community to ensure that the capacity of the wireless communications network keeps up with this ever-increasing user demand. The latest wireless communications systems such as Long Term Evolution (LTE), especially when coupled with interference mitigation techniques, have spectral efficiencies very close to the theoretical Shannon limit. The continuous upgrading of current wireless communications networks to support the latest technologies and densifying the number of cells and base stations per unit area are two of the most widely used approaches to meet the increasing traffic demands.

Another approach that is gaining high attention is to use heterogeneous wireless communications networks, sometimes referred to as heterogeneous networks, wherein the traditional pre-planned macro base stations and macro cells, known as the macro layer, are complemented with several low-powered base stations, serving comparatively small cells, that may be deployed in a relatively unplanned manner. The small cells are typically much smaller than the macro cells. A small cell may be served by a base station having a coverage which typically is in the order of 10's of meters, but could in theory be larger e.g. a couple of kilometers. A macro cell may be served by a base station having a coverage in the range of a distance in the order of a kilometer up to a few tens of kilometers. The 3^{rd} Generation Partnership Project (3GPP) has incorporated the concept of heterogeneous networks as one of the core items of study in the latest enhancements of LTE, such as LTE release 12, e.g. in the shape of "Small Cell Enhancements" (SCE). Several types of low-powered base stations, such as pico base stations, femto base stations, relays, and Remote Radio Heads (RRHs), for realizing heterogeneous networks have been defined. The femto base stations are also known as home base stations or Home eNBs (HeNBs).

One topic that is being studied for LTE release 12 is the possibility of serving a User Equipment (UE) from more than one eNB simultaneously. This is also known as dual connectivity. For example, the UE may be served from a Master eNB (MeNB), serving a macro cell, and from a Small cell eNB, a. k. a. Secondary eNB, (SeNB), serving a small cell. The control plane procedures of LTE have to be updated in order to support this.

One prior art approach is disclosed in US 2011/223900 A1, which shows transmissions between a wireless network and a user equipment in a first direction using a serving node while providing for transmissions in a second direction using a supplemental node. The supplemental node is selected based on providing a better channel condition between the network and the user equipment in the second direction than the serving node.

Another prior art approach is found in US 2012/281680 A1, which discloses that is a UL SCell belongs to a group, the UL synchronization state for that SCell can be derived from the group. Thus, if any group member is UL synchronized, then all other group members are also UL synchronized and the UE is therefore allowed to perform UL transmissions on any activated member of the group. If no member is synchronized, at least one member must be synchronized before any UL transmissions are made. This synchronization can be achieved with an ordered random access procedure, a UE-initiated random access or the reception of a UL timing advance command.

A further prior art approach is disclosed in US 2013/ 028204 A1, which shows transmission timing of a random access preamble in an uplink carrier of a carrier group. The wireless device receives a time alignment command comprising a time adjustment value and an index identifying the carrier group. The wireless device apply the time adjustment value to uplink signals transmitted on all activated uplink carriers in the carrier group.

### SUMMARY

The invention is defined by the independent claims. Embodiments of the invention are defined by the dependent claims. Moreover, examples and aspects, which are not covered by the claims are presented not as embodiments of the invention, but as background art or examples useful for understanding the invention.

An object of embodiments herein is to provide a way of improving the performance in a wireless communications network.

According to a first aspect of embodiments herein, the object is achieved by a method in a first Radio Network Node (RNN) for assisting a wireless device to perform an uplink transmission to a second RNN. The first RNN, the second RNN and the wireless device are operated in a wireless communications network.

Further, the first RNN is configured to serve the wireless device when located in a first cell and the second RNN is configured to serve the wireless device when located in a second cell, wherein the second cell has a size that is below a threshold and arranged to at least partly overlap the first cell.

Furthermore, the first RNN triggers the wireless device to perform the uplink transmission using a configured Timing Advance (TA) value and a guard time without performing a preceding random access procedure in the second cell towards the second RNN.

According to a second aspect of embodiments herein, the object is achieved by a first RNN for assisting a wireless device to perform an uplink transmission to a second RNN. The first RNN, the second RNN and the wireless device are operated in a wireless communications network.

Further, the first RNN is configured to serve the wireless device when located in a first cell and the second RNN is configured to serve the wireless device when located in a second cell, wherein the second cell has a size that is below a threshold and arranged to at least partly overlap the first cell.

Furthermore, the first RNN comprises means adapted to trigger the wireless device to perform the uplink transmission using a configured Timing Advance (TA) value and a guard time without performing a preceding random access procedure in the second cell towards the second RNN.

According to a third aspect of embodiments herein, the object is achieved by a method in a second RNN for assisting a wireless device to perform an uplink transmission to the second RNN. The second RNN and the wireless device are operated in a wireless communications network.

Further, the second RNN is configured to serve the wireless device when located in a second cell, wherein the second cell has a size that is below a threshold and arranged to at least partly overlap the first cell.

Furthermore, the second RNN triggers the wireless device to perform the uplink transmission using a configured Timing Advance (TA) value and a guard time without performing a preceding random access procedure in the second cell towards the second RNN.

According to a fourth aspect of embodiments herein, the object is achieved by a second RNN for assisting a wireless device to perform an uplink transmission to the second RNN. The second RNN and the wireless device are operated in a wireless communications network.

Further, the second RNN is configured to serve the wireless device when located in a second cell, wherein the second cell has a size that is below a threshold and arranged to at least partly overlap the first cell.

Furthermore, the second RNN comprises means adapted to trigger the wireless device to perform the uplink transmission using a configured Timing Advance (TA) value and a guard time without performing a preceding random access procedure in the second cell towards the second RNN.

According to a fifth aspect of embodiments herein, the object is achieved by a method in a wireless device to perform an uplink transmission to a second RNN. The second RNN and the wireless device are operated in a wireless communications network.

Further, the second RNN is configured to serve the wireless device when located in a second cell, wherein the second cell has a size that is below a threshold and arranged to at least partly overlap a first cell served by a first RNN comprised in the wireless communications network.

Furthermore, the wireless device receives a trigger configured to trigger the wireless device to perform the uplink transmission using a configured Timing Advance (TA) value and a guard time.

Yet further, the wireless device performs, by means of the configured TA value and the guard time, the uplink transmission to the second RNN without performing a preceding random access procedure in the second cell towards the second RNN.

According to a sixth aspect of embodiments herein, the object is achieved by a wireless device to perform an uplink transmission to a second RNN. The second RNN and the wireless device are operated in a wireless communications network.

Further, the second RNN is configured to serve the wireless device when located in a second cell, wherein the second cell has a size that is below a threshold and arranged to at least partly overlap a first cell served by a first RNN comprised in the wireless communications network.

Furthermore, the wireless device comprises means adapted to receive a trigger configured to trigger the wireless device to perform the uplink transmission using a configured Timing Advance (TA) value and a guard time.

Yet further, the wireless device comprises means adapted to perform, by means of the configured TA value and the guard time, the uplink transmission to the second RNN without performing a preceding random access procedure in the second cell towards the second RNN.

According to a seventh aspect of embodiments herein, the object is achieved by a computer program, comprising instructions which, when executed on at least one processor, causes the at least one processor to carry out embodiments of the method described herein.

According to an eight aspect of embodiments herein, the object is achieved by a carrier containing the computer program, wherein the carrier is one of an electronic signal, optical signal, radio signal or computer readable storage medium.

Since the wireless device performs the uplink transmission, e.g. an initial uplink transmission, using a configured Timing Advance (TA) value and a guard time without performing a preceding random access procedure in the second cell towards the second RNN, the access delay and overhead are reduced as compared to the access delay and overhead in the prior art systems. Further, a faster handover to the second cell or a faster addition of cells to the set of serving cells for the wireless device from the second RNN is achieved as compared to the handover or addition of cells as provided by the prior art systems. This results in an improved performance in the wireless communications network.

### BRIEF DESCRIPTION OF DRAWINGS

Examples of embodiments herein are described in more detail with reference to attached drawings in which:
Figure 1 schematically illustrates an embodiment of a wireless communications network;
Figure 2 is a flowchart depicting embodiments of a method in a wireless communications network;
Figure 3 is a flowchart depicting embodiments of a method in a first RNN;
Figure 4 is a schematic block diagram illustrating embodiments of a first RNN;
Figure 5 is a flowchart depicting embodiments of a method in a second RNN;
Figure 6 is a schematic block diagram illustrating embodiments of a second RNN;
Figure 7 is a flowchart depicting embodiments of a method in a wireless device; and
Figure 8 is a schematic block diagram illustrating embodiments of a wireless device.

### DETAILED DESCRIPTION

As part of developing embodiments herein, some problems will first be identified and discussed.

A situation addressed by some embodiments herein is when a wireless device operating in a heterogeneous network environment is to access a small cell with the aid of its current cell(s). For example, this may be the case in Carrier Aggregation when the wireless device performs secondary cell addition where the secondary cell is a small cell. During the secondary cell addition the wireless device may perform a Random Access (RA) procedure in the small cell in order to acquire uplink synchronization, i.e. to receive a Timing Advance (TA) value, T_{A}, from the eNB. Another situation addressed by some embodiments herein is when a wireless device operating in a heterogeneous network environment is to access a small cell with the aid of its current Master eNB (MeNB) in cooperation with a Secondary eNB (SeNB). For example, this may be the case when the wireless device performs a full or partial handover to the SeNB and the small cell or adding a small cell to its set of serving cells. The MeNB is usually controlling a larger cell that the wireless device is connected in. After some control signaling involving the SeNB, the MeNB and the wireless device, the wireless device performs a Random Access (RA) procedure in the small cell in order to acquire uplink synchronization, i.e. to receive a Timing Advance (TA) value, T_{A}, from the SeNB. To perform a RA, as in the above two situations, adds overhead and delay to the procedure. To limit this effect it is possible to provide the wireless device with a dedicated random access preamble in order to enable a shortened, contention-less RA procedure and to avoid the risk of preamble collision. This is disclosed in WO2013/020209 A1. However, a problem with this approach is that it may cause a shortage of dedicated random access preambles, thus reducing the efficiency of the method and causing additional problems.

For instance, if the pool of dedicated random access preambles is already depleted, a wireless device may have to wait for a dedicated random access preamble to become available or resort to perform a regular RA procedure. In addition, although the use of a dedicated random access preamble shortens the regular RA procedure, the RA procedure using random access preambles still adds overhead and delay.

These shortcomings are addressed by embodiments herein.

Embodiments herein relate to the area of wireless communications networks and to the cooperation between different cell layers.

In some embodiments described herein, the wireless communications network is a heterogeneous wireless communications network and the cooperation between different cell layers relate to the cooperation between a first cell layer and a second cell layer wherein at least one of the first and second cell layers comprises a small cell. However, it should be understood that embodiments herein also relate to a homogenous wireless communications network comprising a small cell. By the term "small cell" when used herein is meant a cell having a cell size that is below a threshold. This will be described in more detail below in the section "Size of the second cell".

In some embodiments, a small cell served by a Secondary eNB (SeNB) may be overlaid by a larger cell served by a Master eNB (MeNB), wherein the SeNB and the MeNB cooperate to provide the wireless device with superior service and wherein the MeNB may have the main responsibility for certain procedures. However, it should be understood that the cell served by the MeNB does not have to be larger than the small cell served by the SeNB. For example, the cell served by the MeNB may be smaller than the small cell or it may be of the same size as the small cell. Further, in this description, the MeNB is sometimes referred to as a first Radio Network Node (RNN) and the SeNB is sometimes referred to as a second RNN.

As embodiments herein relate to at least one small cell, it is assumed that the Timing Advance may be approximated to zero at typical access attempts in the small cell. By such an assumption it is possible to perform the access by skipping the RA procedure e.g. at handover or when adding the small cell to the set of serving cells. However, the required Timing Advance will still not be zero in all situations, e.g. in cases where the wireless device is handed over to the small cell at a longer distance from the SeNB antenna than typically expected. For instance, in cases of handover because of a coverage hole in the overlaying macro cell, which causes the weak transmissions from the SeNB in the small cell to be stronger than the transmissions from the MeNB in the macro cell. To avoid interference between UE transmissions in these cases a safety guard time is used for the initial uplink transmission from the wireless device in the small cell. Such disadvantageous interference could otherwise occur, e.g. if the wireless device transmits in the small cell on the same frequency, but in the preceding timeslot, as another wireless device.

Embodiments herein also comprise methods of informing the wireless device of when the Random Access procedure may be skipped and what guard time to use for the initial uplink transmission. In addition, methods for allocation of resources for the wireless device's initial uplink transmission in the small cell are provided.

Hence, in very brief summary, embodiments herein comprise the combination of skipping the RA procedure, using a zero or very small configured Timing Advance value, but a guard time for the initial uplink transmission in the small cell, and methods for providing the necessary instructions and resource allocation to the wireless device.

Below, embodiments herein will be illustrated in more detail by a number of exemplary embodiments. It should be noted that these embodiments are not mutually exclusive. Components from one embodiment may be tacitly assumed to be present in another embodiment and it will be obvious to a person skilled in the art how those components may be used in the other exemplary embodiments.

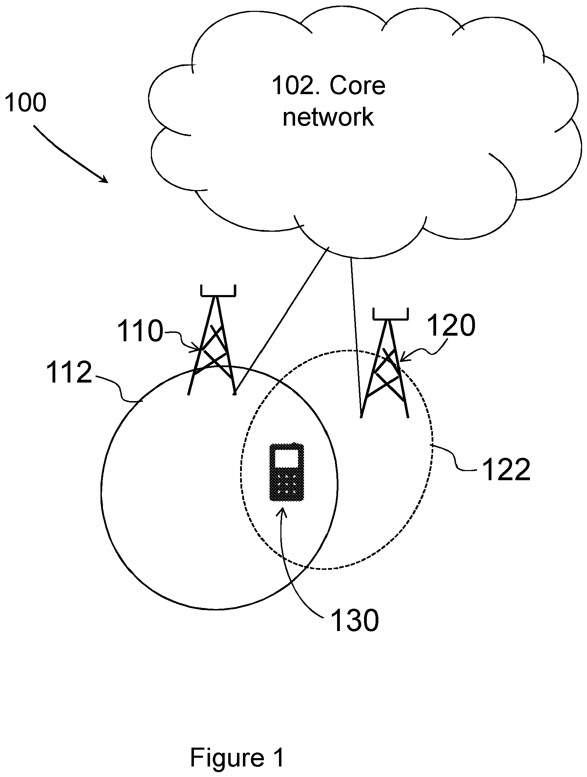

As schematically illustrated in **Figure 1** embodiments herein relate to **a wireless communications network 100.** The wireless communications network 100 may be a wireless communications network such as an LTE, WCDMA, GSM network, any 3GPP cellular network, Wimax, or any cellular network or system. The wireless communications network 100 may be a homogenous wireless communications network or a heterogeneous wireless communications network.

The wireless communications network 100 comprises a **first Radio Network Node (RNN) 110** for transmitting signals in downlink (DL) to **a wireless device 130** when the wireless device 130 is located within **a first geographical area 112, herein sometimes referred to as a first cell 112,** served by the first RNN 110. Further, the first RNN 110 is configured to receive signals in uplink (UL) from the wireless device 130 when the wireless device 130 is located within the first cell 112.

The wireless communications network 100 comprises further a **second Radio Network Node (RNN) 120** for transmitting signals in downlink to the wireless device 130 when the wireless device 130 is located within **a second geographical area 122, herein sometimes referred to as a second cell 122,** served by the second RNN 120. Further, the second RNN 120 is configured to receive signals in uplink from the wireless device 130 when the wireless device 130 is located within the second cell 122.

The first and second RNN 110,120 may each be a transmission point, or a node serving or equipped with one or more remotely located transmission point(s) (e.g. antenna site(s)), such as a radio base station, for example an eNB, an eNodeB, or an Home Node B, an Home eNode B or any other network node capable to serve a wireless device such as a user equipment or a machine type communication device comprised in the wireless communications network.

The wireless device 130 is sometimes also referred to as a User Equipment (UE). The wireless device 130 may e.g. be a mobile terminal or a wireless terminal, a mobile phone, a smartphone, a computer such as e.g. a laptop, a Personal Digital Assistant (PDA) or a tablet computer, sometimes referred to as a surf plate, with wireless capability, or any other radio network unit capable to communicate over a radio link in a wireless communications network. Please note the term user equipment used in this document also covers other wireless devices such as Machine to Machine (M2M) devices, even though they do not have any human user.

Further, **a core network 102** may be comprised in the wireless communications network 100 and connected to the respective first and second RNN 110, 120.

It should be understood that the wireless communications network 100 may comprise a plurality of network nodes. However, only three network nodes; the first and second radio network nodes 110,120 and the wireless device 130, are depicted in Figure 1.

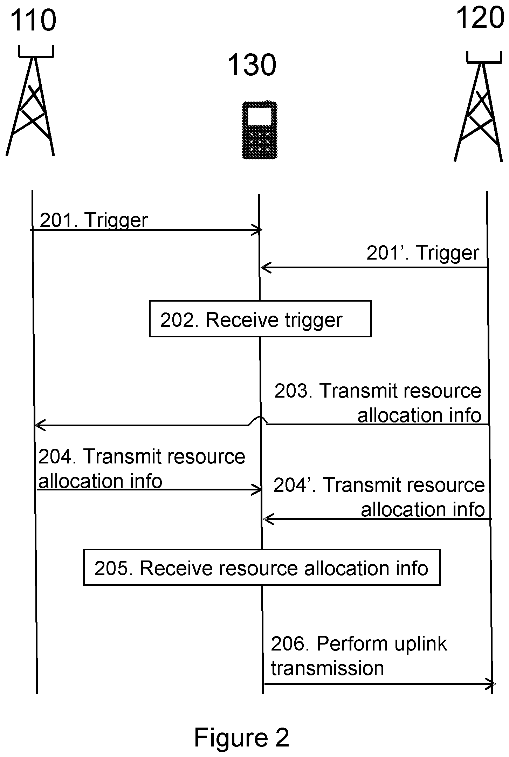

A **method in the wireless communications network 100** for assisting the wireless device 130 to perform an uplink transmission to the second RNN 120 will now be described with reference to a flow chart depicted in **Figure 2****.** As mentioned above, the first RNN 110, the second RNN 120 and the wireless device 130 are operated in the wireless communications network 100. Further, the first RNN 110 is configured to serve the wireless device 130 when located in a first cell 112 and the second RNN 120 is configured to serve the wireless device 130 when located in a second cell 122, wherein the second cell 122 has a size that is below a threshold and arranged to at least partly overlap the first cell 112. The cell size of the second cell 122 will be described in more detail below under the section "Cell size of the second cell". The method comprises one or more of the following actions. It should be understood that actions may be taken in another suitable order and that actions may be combined.

### Action 201

The first RNN 110 may transmit a trigger to the wireless device 130 in order to trigger the wireless device 130 to perform the uplink transmission to the second RNN 120.

### Action 201'

Alternatively, or in addition to a trigger transmitted from the first RNN 110 to the wireless device 130, the second RNN 120 may transmit a trigger the wireless device 130 in order to trigger the wireless device 130 to perform an uplink transmission to the second RNN 120.

The trigger from the first RNN 110 and/or the second RNN 120 may comprise or relate to implicit or explicit information of a Timing Advance (TA) value to use. The TA value is sometimes herein referred to as a configured TA value. Further, the trigger may comprise or relate to an implicit or explicit instruction to apply a guard time and possibly also the length of the guard time. As will be described below in e.g. the section "Configured TA value and guard time", the information relating to the configured TA value and/or the guard time may be provided in different ways.

### Action 202

The wireless device 130 receives the trigger. The trigger is received from the first RNN 110 and/or the second RNN 120.

### Action 203

The second RNN 120 may transmit resource allocation information to the first RNN 110, whereby the first RNN 110, in Action 204, may inform the wireless device 130 about resources allocated for the uplink transmission.

### Action 204

The first RNN 100 transmit resource allocation information to the wireless device 130.

### Action 204'

Alternatively, or in addition to transmitting resource allocation information to the first RNN 110, the second RNN 120 may transmit the resource allocation information the wireless device 130. If only the second RNN 120 transmits the resource allocation information to the wireless device 130, then the second RNN 120 may not transmit resource allocation information to the first RNN 110 in action 203, i.e. it may omit action 203.

### Action 205

The wireless device 130 receives the resource allocation information. The resource allocation information is received from the first RNN 110 and/or the second RNN 120.

### Action 206

The wireless device 130 performs the uplink transmission to the second RNN 120 without performing a preceding random access procedure in the second cell 122. The uplink transmission may be performed by means of the received resource allocation information on the resources allocated. As will be described in more detail below, the wireless device 130 performs the uplink transmission using a configured Timing Advance, TA, value and a guard time without performing a preceding random access procedure in the second cell 122 towards the second RNN 120.

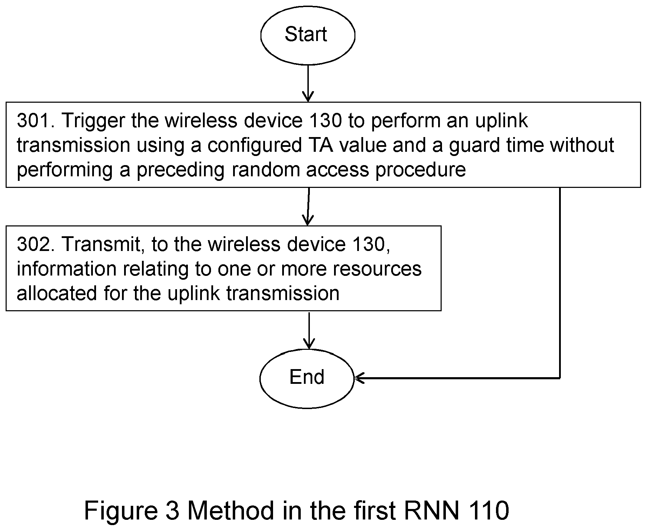

A **method in the first RNN 100** for assisting the wireless device 130 to perform the uplink transmission to the second RNN 120 will now be described with reference to a flow chart depicted in **Figure 3****.** As mentioned above, the first RNN 110, the second RNN 120 and the wireless device 130 are operated in the wireless communications network 100. Further, the first RNN 110 is configured to serve the wireless device 130 when located in the first cell 112 and the second RNN 120 is configured to serve the wireless device 130 when located in the second cell 122, wherein the second cell 122 has a size that is below a threshold and arranged to at least partly overlap the first cell 112. In some embodiments herein, the threshold is determined based on a maximum TA value used by one or more wireless devices when performing an uplink transmission in the second cell 122. However, as previously mentioned, the cell size of the second cell 122 will be described in more detail below under the section "Cell size of the second cell". The method comprises one or more of the following actions. It should be understood that actions may be taken in another suitable order and that actions may be combined.

### Action 301

The first RNN 110 triggers the wireless device 130 to perform the uplink transmission using a configured Timing Advance, TA, value and a guard time without performing a preceding random access procedure in the second cell 122 towards the second RNN 120.

However, it should be understood that the wireless device 130 earlier may have performed a random access procedure towards the second RNN 120. For example, the wireless device 130 may have been configured to use both the first RNN 110 and the second RNN 120 since it was needing high throughput. And then, the wireless device 130 may have been performing a random access procedure towards the second RNN, e.g. due to positioning reasons. Later, the traffic ends and therefore the wireless device 130 no longer needs the second RNN 120 so it is deconfigured. However, a while later the wireless device 130 may start a service that needs high throughput and then the communications network may configure the second RNN 120 for the wireless device 130. In such a case and according to embodiments, the wireless device 130 may be triggered to perform the uplink transmission using a configured Timing Advance, TA, value and a guard time without performing a preceding random access procedure in the second cell 122 towards the second RNN 120, as described herein.

In some embodiments, the first RNN 110 triggers the wireless device 130 by transmitting, to the wireless device 130, configuration information that is configured to instruct the wireless device 130 to use the configured TA value and the guard time when performing the uplink transmission. The first RNN 110 may transmit system information comprising the configured TA value and/or the guard time. Further, the first RNN 110 may transmit a cell list comprising the configured TA value and/or the guard time for one or more of cells of the cell list, wherein the cell list is a neighbor cell list or a measurement target list. Furthermore, the first RNN 110 may transmit the configured TA value and/or the guard time in a message ordering the wireless device 130 to perform handover to the second RNN 120 or to add the second cell to the wireless device's set of serving cells. Yet further, the first RNN 110 may transmit the initial TA value and/or the guard time in a message configuring the wireless device 130 with additional radio resources for the uplink transmission to the second RNN 120.

In some embodiments, the configured TA value is zero or at least less than N×16×Tₛ, wherein N is an integer larger than zero and Tₛ is a basic time unit used in the communications network 100. For example, in LTE Tₛ = 1/(15000 × 2048) ≈ 32,55 nanoseconds.

The guard time may have a length that is determined based on information relating to a coverage of the second cell 122. However, the guard time may have a length that is determined based on information relating to a distance between the wireless device 130 and the second RNN 120.

Further, it should be understood that the TA value may be configured in several ways. For example, the TA value may be configured in the wireless device 130 in conjunction with the triggering, e.g. in the same message, at an earlier point in time via broadcast system information in the first cell 112, or at an earlier point in time via broadcast system information in the second cell 122. Further, the TA value may be configured at an earlier point in time in a dedicated and/or unicast message, i.e. transmitted only to that particular wireless device 130, in the first cell 112, or in conjunction with an attach procedure when the wireless device 130 attached to the wireless communications network 100. Furthermore, the TA value may be configured at an earlier point in time in the form of configuration data stored in a Universal Subscriber Identity Module (USIM) of the wireless device 130, or when the wireless device 130 was manufactured just to mention some possible ways of configuring of the TA value.

### Action 302

The first RNN 110 transmits, to the wireless device 130, information relating to one or more resources allocated for the uplink transmission to the second RNN 120. This is performed in order to inform the wireless device 130 about one or more resources available at the second RNN 120 for the uplink transmission to the second RNN 120.

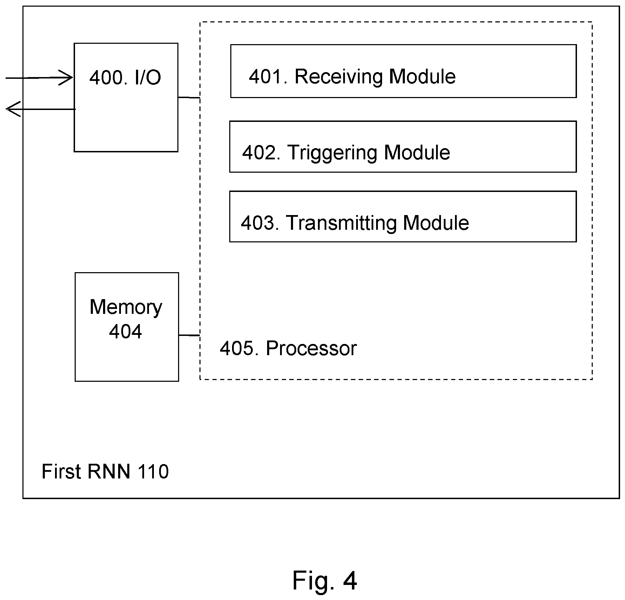

To perform the method in the first RNN 110 to assist the wireless device 130 to perform the uplink transmission to the second RNN 120, **the first RNN 110** may comprise an arrangement depicted in **Figure 4****.** As previously mentioned, the first RNN 110, the second RNN 120 and the wireless device 130 are operated in the wireless communications network 100.

In some embodiments, the first RNN 110 comprises **an input and/or output interface 400** configured to communicate with one or more other communication devices, one or more radio network nodes or one or more wireless devices.

The first RNN 110 may comprise a **receiving module 401** configured to receive information such as e.g. user code bits from the wireless device 130. The receiving module 401 may be a wireless receiver of the first RNN 110.

The first RNN 110 comprises means, such as e.g. a **triggering module 402,** adapted to trigger the wireless device 130 to perform the uplink transmission to the second RNN 120. The means is adapted to trigger the wireless device 130 to perform the uplink transmission using a configured Timing Advance, TA, value and a guard time without performing a preceding random access procedure in the second cell 122 towards the second RNN 120.

The configured TA value may be zero or at least less than N×16×Tₛ, wherein N is an integer larger than zero, and Tₛ is a basic time unit used in the communications network 100.

The guard time may have a length that is determined based on information relating to a coverage of the second cell 122. In some embodiments, the guard time has a length that is determined based on information relating to a distance between the wireless device 130 and the second RNN 120.

The means adapted to trigger may further be adapted to transmit, to the wireless device 130, configuration information that is configured to instruct the wireless device 130 to use the configured TA value and the guard time when performing the uplink transmission.

In some embodiments, the means adapted to trigger is adapted to transmit system information comprising the configured TA value and/or the guard time.

The means adapted to trigger may further be adapted to transmit a cell list comprising the configured TA value and/or the guard time for one or more cells of the cell list, wherein the cell list is a neighbor cell list or a measurement target list.

In some embodiments, the means adapted to trigger is adapted to transmit the configured TA value and/or the guard time in a message ordering the wireless device to perform handover to the second RNN 120.

The means adapted to trigger may further be adapted to transmit the configured TA value and/or the guard time in a message configuring the wireless device 130 with additional radio resources.

The triggering module 402 may be implemented as **a processor 405** of the first RNN 110.

Further, the first RNN 110 comprises means, such as e.g. **a transmitting module 403,** adapted to transmit, to the wireless device 130, information relating to one or more resources allocated for the uplink transmission for the uplink transmission to the second RNN 120.

The transmitting module 403 may be a wireless transmitter of the first RNN 110.

The threshold may be determined based on a maximum TA value used by one or more wireless devices when performing an uplink transmission in the second cell 122.

The first RNN 110 may also comprise means for storing data such as user code data. In some embodiments, the first RNN 110 comprises **a memory 404** configured to store the data. The user code data may be processed or non-processed user code data or data and/or information relating thereto. The memory 404 may comprise one or more memory units. Further, the memory 404 may be a computer data storage or a semiconductor memory such as a computer memory, a read-only memory, a volatile memory or a non-volatile memory. The memory is arranged to be used to store obtained information, data, configurations, schedulings, and applications etc. to perform the methods herein when being executed in the first RNN 110.

Embodiments herein for assisting the wireless device 130 to perform the uplink transmission to the second RNN 120 may be implemented through one or more processors, such as **the processor 405** in the arrangement depicted in Fig. 4, together with computer program code for performing the functions and/or method actions of embodiments herein. The program code mentioned above may also be provided as a computer program product, for instance in the form of a data carrier carrying computer program code for performing the embodiments herein when being loaded into the first RNN 110. One such carrier may be in the form of an electronic signal, optical signal, radio signal or computer readable storage medium. The computer readable storage medium may be a CD ROM disc or a memory stick.

The computer program code may furthermore be provided as pure program code on a server and downloaded to the first RNN 110.

Those skilled in the art will also appreciate that the receiving module, the triggering module, and the transmitting module described above may refer to a combination of analog and digital circuits, and/or one or more processors configured with software and/or firmware, e.g. stored in the memory, that when executed by the one or more processors such as the processors in the first RNN 110 perform as described above. One or more of these processors, as well as the other digital hardware, may be included in a single application-specific integrated circuitry (ASIC), or several processors and various digital hardware may be distributed among several separate components, whether individually packaged or assembled into a System-on-a-Chip (SoC).

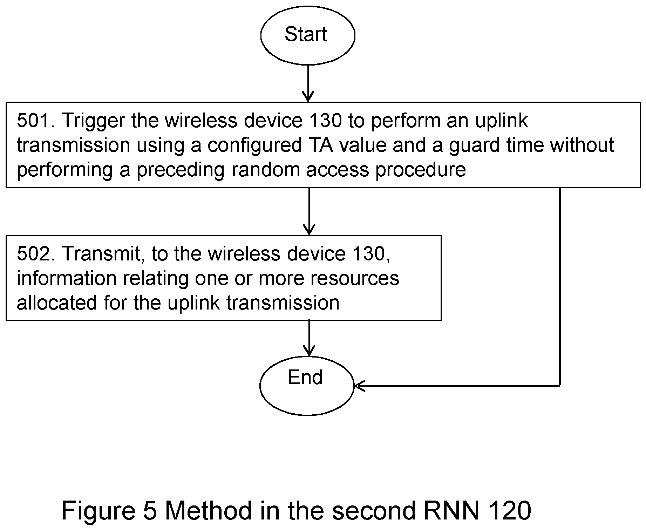

A **method in the second RNN 120** for assisting the wireless device 130 to perform the uplink transmission to the second RNN 120 will now be described with reference to a flow chart depicted in **Figure 5****.** As mentioned above, the first RNN 110, the second RNN 120 and the wireless device 130 are operated in the wireless communications network 100. Further, the first RNN 110 is configured to serve the wireless device 130 when located in the first cell 112 and the second RNN 120 is configured to serve the wireless device 130 when located in the second cell 122, wherein the second cell 122 has a size that is below a threshold and arranged to at least partly overlap the first cell 112. In some embodiments, the threshold is determined based on a maximum TA value used by one or more wireless devices when performing an uplink transmission in the second cell 122. As previously mentioned, the cell size of the second cell 122 will be described in more detail below under the section "Cell size of the second cell". The method comprises one or more of the following actions. It should be understood that actions may be taken in another suitable order and that actions may be combined.

### Action 501

The second RNN 120 triggers the wireless device 130 to perform the uplink transmission using a configured Timing Advance, TA, value and a guard time without performing a preceding random access procedure in the second cell 122 towards the second RNN 120.

In some embodiments, the configured TA value is zero or at least less than N×16×Tₛ, wherein N is an integer larger than zero, and Tₛ is a basic time unit used in the communications network 100. For example, in LTE Tₛ = 1/(15000 × 2048) ≈ 32,55 nanoseconds.

The guard time may have a length that is determined based on information relating to a coverage of the second cell 122. However, the guard time may have a length that is determined based on information relating to a distance between the wireless device 130 and the second RNN 120.

In some embodiments, the second RNN 120 transmits, to the wireless device 130, configuration information that is configured to instruct the wireless device 130 to use the configured TA value and the guard time when performing the uplink transmission.

The second RNN 120 may transmit system information comprising the configured TA value and/or the guard time.

As previously mentioned and exemplified, the TA value may be configured in several ways.

### Action 502

The second RNN 120 transmits, to the wireless device 130, information relating to one or more resources allocated for the uplink transmission to the second RNN 120. This is performed in order to inform the wireless device 130 about one or more resources available for the uplink transmission to the second RNN 120.

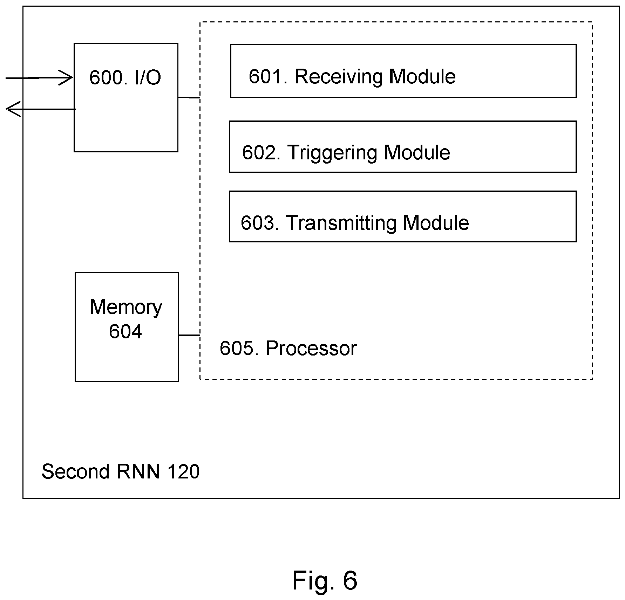

To perform the method for assisting the wireless device 130 to perform the uplink transmission to the second RNN 120, **the second RNN 120** may comprise an arrangement depicted in **Figure 6****.** As mentioned above, the first RNN 110, the second RNN 120 and the wireless device 130 are operated in the wireless communications network 100. Further, the first RNN 110 is configured to serve the wireless device 130 when located in the first cell 112 and the second RNN 120 is configured to serve the wireless device 130 when located in the second cell 122, wherein the second cell 122 has a size that is below a threshold and arranged to at least partly overlap the first cell 112. The threshold may be determined based on a maximum TA value used by one or more wireless devices when performing an uplink transmission in the second cell 122. As previously mentioned, the cell size of the second cell 122 will be described in more detail below under the section "Cell size of the second cell".

In some embodiments, the second RNN 120 comprises **an input and/or output interface 600** configured to communicate with one or more other communication devices, one or more radio network nodes, or one or more wireless devices.

The second RNN 120 comprises means, such as e.g. **a receiving module 601,** adapted to receive information such as e.g. user code bits from the wireless device 130. The receiving module 601 may be a wireless receiver of the second RNN 120.

The second RNN 120 comprises further means, such as e.g. **a triggering module 602,** adapted to trigger the wireless device 130 to perform the uplink transmission to the second RNN 120.

The means may be adapted to trigger the wireless device 130 to perform the uplink transmission using a configured Timing Advance, TA, value and a guard time without performing a preceding random access procedure in the second cell 122 towards the second RNN 120.

The configured TA value may be zero or at least less than N×16×Tₛ, wherein N is an integer larger than zero, and Tₛ is a basic time unit used in the communications network 100.

The guard time may have a length that is determined based on information relating to a coverage of the second cell 122. However, the guard time may have a length that is determined based on information relating to a distance between the wireless device 130 and the second RNN 120.

In some embodiments, the means adapted to trigger is further adapted to transmit, to the wireless device 130, configuration information that is configured to instruct the wireless device 130 to use the configured TA value and the guard time when performing the uplink transmission.

The means adapted to trigger may further be adapted to transmit system information comprising the configured TA value and/or the guard time.

The triggering module 602 may be implemented as a **processor 605** of the second RNN 120.

Further, the second RNN 120 may comprise means, such as e.g. a **transmitting module 603,** adapted to transmit e.g. a signal to one or more other communications devices.

The means may be adapted to transmit, to the wireless device 130, information relating to one or more resources allocated for the uplink transmission for the uplink transmission to the second RNN 120.

The transmitting module 603 may be a wireless transmitter of the second RNN 120.

The second RNN 120 may also comprise means for storing data such as user code data. In some embodiments, the second RNN 120 comprises a **memory 604** configured to store the data. The user code data may be processed or non-processed user code data or data and/or information relating thereto. The memory 604 may comprise one or more memory units. Further, the memory 604 may be a computer data storage or a semiconductor memory such as a computer memory, a read-only memory, a volatile memory or a non-volatile memory. The memory is arranged to be used to store obtained information, data, configurations, schedulings, and applications etc. to perform the methods herein when being executed in the second RNN 120.

Embodiments herein for assisting the wireless device 130 to perform the uplink transmission to the second RNN 120 may be implemented through one or more processors, such as **the processor 605** in the arrangement depicted in Fig. 6, together with computer program code for performing the functions and/or method actions of embodiments herein. The program code mentioned above may also be provided as a computer program product, for instance in the form of a data carrier carrying computer program code for performing the embodiments herein when being loaded into the second RNN 120. One such carrier may be in the form of an electronic signal, optical signal, radio signal or computer readable storage medium. The computer readable storage medium may be a CD ROM disc or a memory stick.

The computer program code may furthermore be provided as pure program code on a server and downloaded to the second RNN 120.

Those skilled in the art will also appreciate that the receiving module, the triggering module, and the transmitting module above may refer to a combination of analog and digital circuits, and/or one or more processors configured with software and/or firmware, e.g. stored in the memory, that when executed by the one or more processors such as the processors in the second RNN 120 perform as described above. One or more of these processors, as well as the other digital hardware, may be included in a single application-specific integrated circuitry (ASIC), or several processors and various digital hardware may be distributed among several separate components, whether individually packaged or assembled into a System-on-a-Chip (SoC).

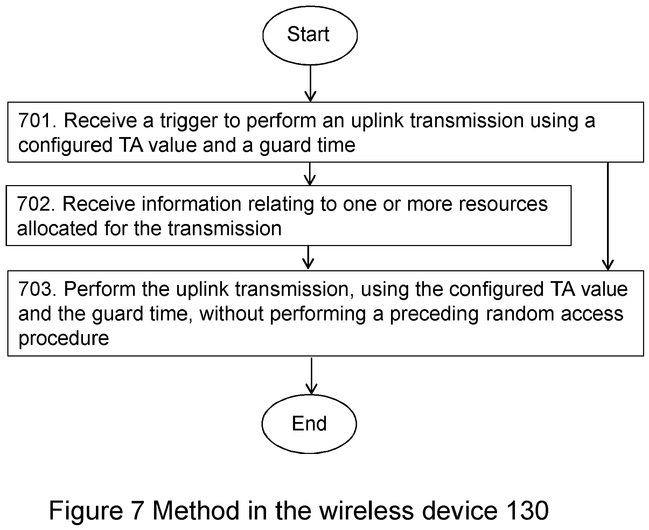

A **method in the wireless device 130** to perform the uplink transmission to the second RNN 120 will now be described with reference to a flow chart depicted in Figure 7. As mentioned above, the first RNN 110, the second RNN 120 and the wireless device 130 are operated in the wireless communications network 100. Further, the first RNN 110 is configured to serve the wireless device 130 when located in a first cell 112 and the second RNN 120 is configured to serve the wireless device 130 when located in a second cell 122, wherein the second cell 122 has a size that is below a threshold and arranged to at least partly overlap the first cell 112. The threshold may be determined based on a maximum TA value used by one or more wireless devices when performing an uplink transmission in the second cell 122. As previously mentioned, the cell size of the second cell 122 will be described in more detail below under the section "Cell size of the second cell". The method comprises one or more of the following actions. It should be understood that actions may be taken in another suitable order and that actions may be combined.

### Action 701

The wireless device 130 receives a trigger configured to trigger the wireless device 130 to perform the uplink transmission using a configured Timing Advance, TA, value and a guard time. As previously, the trigger may be received from the first RNN 110 or the second RNN 120.

The configured TA value may be zero or at least less than N×16×Tₛ, wherein N is an integer larger than zero, and Tₛ is a basic time unit used in the communications network 100. For example, in LTE Tₛ = 1/(15000 × 2048) ≈ 32.55 nanoseconds.

In some embodiments, the guard time has a length that is determined based on information relating to a coverage of the second cell 122. However, the guard time may have a length that is determined based on information relating to a distance between the wireless device 130 and the second RNN 120.

In some embodiments, the wireless device 130 receives configuration information that is configured to instruct the wireless device 130 to use the configured TA value and the guard time when performing the uplink transmission.

The wireless device 130 may receive system information comprising the configured TA value and/or the guard time.

In some embodiments, the wireless device 130 receives a cell list comprising the configured TA value and/or the guard time for one or more cells of the cell list. The cell list may be a neighbor cell list or a measurement target list.

The wireless device 130 may receive the configured TA value and/or the guard time in a message ordering the wireless device 130 to perform handover to the second RNN 120.

In some embodiments, the wireless device 130 receives the configured TA value and/or the guard time in a message configuring the wireless device 130 with additional radio resources for the uplink transmission to the second RNN 120.

As previously mentioned and exemplified, the TA value may be configured in several ways.

### Action 702

In some embodiments, the wireless device 130 receives information relating to one or more resources allocated for the uplink transmission to the second RNN 120.

### Action 703

The wireless device 130 performs, by means of the configured TA value and the guard time, the uplink transmission to the second RNN 120 without performing a preceding random access procedure in the second cell 122 towards the second RNN 120.

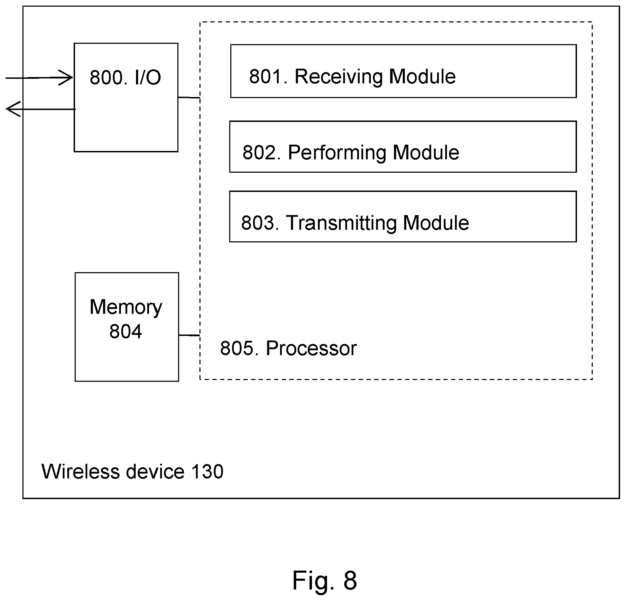

To perform the method of performing the uplink transmission to the second RNN 120, **the wireless device 130** may comprise an arrangement depicted in **Figure 8****.** As mentioned above, the first RNN 110, the second RNN 120 and the wireless device 130 are operated in the wireless communications network 100. Further, the first RNN 110 is configured to serve the wireless device 130 when located in a first cell 112 and the second RNN 120 is configured to serve the wireless device 130 when located in a second cell 122, wherein the second cell 122 has a size that is below a threshold and arranged to at least partly overlap the first cell 112. The threshold may be determined based on a maximum TA value used by one or more wireless devices when performing an uplink transmission in the second cell 122. As previously mentioned, the cell size of the second cell 122 will be described in more detail below under the section "Cell size of the second cell 122".

In some embodiments, the wireless device 130 comprises **an input and/or output interface 800** configured to communicate with one or more other communication devices, one or more radio network nodes, or one or more wireless devices.

The wireless device 130 comprises means, such as e.g. **a receiving module 801,** adapted to receive a trigger configured to trigger the wireless device 130 to perform the uplink transmission using a configured Timing Advance, TA, value and a guard time. The configured TA value may be zero or at least less than N×16×Tₛ, wherein N is an integer larger than zero, and Tₛ is a basic time unit used in the communications network 100.

In some embodiments, the guard time has a length that is determined based on information relating to a coverage of the second cell 122. However, the guard time has a length that is determined based on information relating to a distance between the wireless device 130 and the second RNN 120.

In some embodiments, the means adapted to receive is further adapted to receive configuration information that is configured to instruct the wireless device 130 to use the configured TA value and the guard time when performing the uplink transmission.

Further, the means adapted to receive may further be adapted to receive system information comprising the configured TA value and/or the guard time.

In some embodiments, the means adapted to receive is further adapted to receive a cell list comprising the configured TA value and/or the guard time for one or more cells of the cell list, wherein the cell list is a neighbor cell list or a measurement target list.

The means adapted to receive may further be adapted to receive the configured TA value and/or the guard time in a message ordering the wireless device 130 to perform handover to the second RNN 120.

In some embodiments, the means adapted to receive is adapted to receive the configured TA value and/or the guard time in a message configuring the wireless device with additional radio resources for the uplink transmission to the second RNN.

The means adapted to receive may further be adapted to receive information relating to one or more resources allocated for the uplink transmission to the second RNN 120.

The receiving module 801 may be a wireless receiver of the wireless device 130.

The wireless device 130 comprises further means, such as e.g. **a performing module 902,** adapted to perform, by means of the configured TA value and the guard time, the uplink transmission to the second RNN 120 without performing a preceding random access procedure in the second cell 122 towards the second RNN 120.

The performing module 802 may be implemented as **a processor 805** of the wireless device 130.

Further, the wireless device 130 may comprise means, such as e.g. **a transmitting module 803,** adapted to transmit e.g. a signal to one or more other communications devices.

The wireless device 130 may also comprise means for storing data such as user code data. In some embodiments, the wireless device 130 comprises **a memory 804** configured to store the data. The user code data may be processed or non-processed user code data or data and/or information relating thereto. The memory 804 may comprise one or more memory units. Further, the memory 804 may be a computer data storage or a semiconductor memory such as a computer memory, a read-only memory, a volatile memory or a non-volatile memory. The memory is arranged to be used to store obtained information, data, configurations, schedulings, and applications etc. to perform the methods herein when being executed in the wireless device 130.

Embodiments herein for performing the uplink transmission to the second RNN 120 may be implemented through one or more processors, such as **the processor 805** in the arrangement depicted in Fig. 8, together with computer program code for performing the functions and/or method actions of embodiments herein. The program code mentioned above may also be provided as a computer program product, for instance in the form of a data carrier carrying computer program code for performing the embodiments herein when being loaded into the wireless device 130. One such carrier may be in the form of an electronic signal, optical signal, radio signal or computer readable storage medium. The computer readable storage medium may be a CD ROM disc or a memory stick.

The computer program code may furthermore be provided as pure program code on a server and downloaded to the wireless device 130.

Those skilled in the art will also appreciate that the receiving module, the performing module, and the transmitting module above may refer to a combination of analog and digital circuits, and/or one or more processors configured with software and/or firmware, e.g. stored in the memory, that when executed by the one or more processors such as the processors in the wireless device 130 perform as described above. One or more of these processors, as well as the other digital hardware, may be included in a single application-specific integrated circuitry (ASIC), or several processors and various digital hardware may be distributed among several separate components, whether individually packaged or assembled into a System-on-a-Chip (SoC).

Embodiments herein also relate to a computer program, comprising instructions which, when executed on at least one processor, causes the at least one processor to carry out the method according to any one of the methods described herein.

Further, embodiments herein also relate to a carrier containing the computer program of embodiments desired herein, wherein the carrier is one of an electronic signal, optical signal, radio signal or computer readable storage medium.

### Cell size of the second cell

As previously mentioned, the second cell 122 has a size that is below a threshold and arranged to at least partly overlap the first cell 112. Thus, the second cell 122 should have a size that is below an upper limit. Alternatively, this may be expressed as the second cell 122 should have a size smaller than a maximum size or as the second cell 122 is smaller than a maximum size. Further, as previously mentioned the second cell 122 may be referred to as a small cell, and the first cell 112 may have a cell size that is smaller than, equal to or larger than the cell size of the second cell 122.

In some embodiments herein, the threshold mentioned above is determined based on a maximum TA value used by one or more wireless devices when performing an uplink transmission in the second cell 122. Thus, the size of the second cell 122 may be defined in relation to the maximum TA value used by one or more wireless device when transmitting data in the second cell 122. The used maximum TA value may in turn be defined as a TA value which is exceeded only by a certain fraction of the uplink transmissions in the second cell 122, where this fraction may be e.g. 5%, 2.5% or 0.25%. In such an example the threshold may be expressed as N_{TA} = X. Thus, the cell size of the second cell may be such that the second cell is a cell in which statistics of TA values assigned to (and used by) wireless devices in the cell indicate that the TA values used by wireless devices in the cell exceed X less than a fraction Y of the times, wherein X may be e.g. 2×16×Tₛ, and wherein Tₛ = 1/(15000 × 2048) ≈ 32.55 nanoseconds in LTE, and Y may be e.g. 2.5%. The statistics on which such cell size estimation are based may be gathered by the base station serving the cell, e.g. the eNB in LTE, or some other network node during a short or long period or continuously, e.g. using an exponential average or some other principle for moving average calculation. However, note that this is only an example of how the size of the second cell 122 may be defined. Other definitions may be used without affecting the applicability of embodiments described herein.

One example of another definition of the size of the second cell 122 may be a definition in relation to the maximum TA value assigned to one or more wireless device that are handed over to the second cell 122, wherein the maximum TA value is based on the timing of the reception of a random access preamble transmitted by the wireless device in the second cell 122 in conjunction with a handover into the second cell 122. The maximum TA value assigned in conjunction with a handover into the second cell 122 may in turn be defined as a TA value which is exceeded only a certain fraction of the times a wireless device is assigned a TA value in conjunction with a handover into the second cell 122, wherein this fraction may be e.g. 10%, 5% or 2%. In such an example the threshold may be expressed *N_{TA}* = X. Thus, the cell size of the second cell may be such that the second cell is a cell in which statistics of TA values assigned to wireless devices being handed over to the cell indicate that these TA values exceed X less than a fraction Y of the times, where X may be e.g. 2×16×Tₛ (where Tₛ = 1/(15000 × 2048) ≈ 32.55 nano-seconds in LTE), and Y may be e.g. 5%. Such statistics may be kept per target cell (i.e. the cell to which the wireless devices are handed over) or per combination of source and target cell (i.e. one set of statistics for each combination of cell handing over the wireless device and cell to which the wireless device is handed over), wherein the latter principle may result in different statistics for different source cells for the same target cell.

It should be noted that during a RA procedure the communications network may calculate which TA value the wireless device should use. According to current specifications, the wireless device sends the RA preamble upon reception of the DL transmission, i.e. synchronized with the reception of DL transmissions, e.g. DL subframes, so the communications network knows that when it receives the preamble it has passed 2×propagation delay since the communications network sent the DL. Thus, the 2x (two times) comes from the round trip time. For example, the communications network may in a "learning phase" record typical propagation delays in a cell and then use this information to determine the cell size. The communications network, preferably the base station service the concerned cell, e.g. the eNB in LTE, may also record the Timing Advance assigned to a UE in conjunction with a RA procedure and subsequently keep track of modifications of this Timing Advance (which are ordered by the base station). This way, the base station may record statistics of Timing Advance values used for all or a part of all uplink transmissions UEs perform in the cell.

An alternative specification text for defining the cell size of the second cell could be to refer to a cell for which coverage maps created at the cell planning phase or through drive tests indicate that the longest distance from the cell border to an antenna site would require a TA value no larger than X, where X may be e.g. 2×16×Tₛ (where Tₛ = 1/(15000 × 2048) ≈ 32.55 nanoseconds in LTE). By recalculating the TA to a distance the same definition becomes that cell size of the second cell is such that the second cell is a cell for which coverage maps created at the cell planning phase or through drive tests indicate that the longest distance from the cell border to an antenna site is no longer than 313 meters.

### Configured TA value and guard time

As previously mentioned, embodiments herein are based on the fact that a small cell, e.g. the second cell 122, as the name implies, is typically small and thus has a very short propagation delay for communication between a wireless device 130 when located in the small cell and its serving RNN, e.g. the second RNN 120. Thus, for a small cell, e.g. the second cell 122, it may be assumed that no Timing Advance (TA) is needed for uplink transmissions in the small cell. That is, the TA value, T_{A}, is equal to zero, i.e. T_{A} = 0, or, almost equal to zero.

However, in slightly larger small cells, the TA value, T_{A}, is larger than zero but within a small range. For example, the TA value, T_{A}, is smaller than or equal to N×16×Tₛ, wherein N is in the range [0, 1, 2, 3, 4, 5, ...], 16×Tₛ is the basic adjustment step of the Timing Advance and Tₛ is the basic time unit of LTE (Tₛ = 1/(15000×2048) ≈ 32.55 nanoseconds), i.e. 16× Tₛ = 16/(15000x2048) ≈ 520 nanoseconds.

Thus, in embodiments herein it is assumed that a reasonable TA value, T_{A}, may be set in advance for the wireless device 130. This initial TA value may be zero, but TA values slightly above zero are, as mentioned above, also conceivable. The rationale of using a very small, but non-zero TA value is that an eNB, e.g. the second RNN 120, typically may handle reception of an uplink transmission with a small Timing Advance error, such as errors of up to two or three adjustment steps, i.e. up to 2×16×Tₛ or 3×16×Tₛ. Thus, assuming an uplink timing error acceptance range of ±2×16×Tₛ, an uplink transmission transmitted with a TA value, T_{A}, of 2×16×Tₛ (i.e. two adjustment steps above zero) would be acceptable in small cells ranging from the really small ones, for which T_{A} = 0 is suitable all over the cell, to slightly larger ones, for which the ideal TA value varies between zero close to the receiving antenna and 4×16×Tₛ at the cell edge. Hence, leveraging the marginal Timing Advance error tolerance of a typical eNB, it is possible to preset a TA value for a wireless device for a larger range of small cells than if the TA value is always set to zero.

When the TA value is known beforehand, the Random Access (RA) procedure may be skipped, thereby eliminating the control overhead and delay induced by this procedure. The purpose of the RA procedures may in some scenarios only be to establish a valid TA value and hence if the TA value is known beforehand the RA procedure may be avoided in order to save or reduce time delay as well as radio resources and energy. However, even when the second cell 122 in typical situations is small enough to allow a zero, or very small, TA value to be used, this may not apply in all situations. For example, this may not apply in cases where the wireless device 130 is handed over to the second cell 122 at a longer distance from the antenna of the second RNN 120 than typically expected, for instance because of a temporary or permanent coverage hole in the overlaying or partly overlapping first cell 112, which causes the weak transmissions from the second RNN 120 in the second cell 122 to be stronger than the transmissions from the first RNN 110 in the first cell 112.

To ensure that uplink transmissions from a wireless device 130 does not adversely interfere with subsequent transmissions (on the same frequency/frequencies) from other wireless devices in the second cell 122 in such situations, the wireless device 130 may use a guard time in its initial uplink transmission in the second cell 122 as a safety precaution. As the wireless device 130 cannot distinguish these situations from the typical situations with shorter propagation times, the wireless device 130 has to apply the safety margin in the form of the guard time in all cases. However, the wireless device 130 only has to use this guard time in the first uplink transmission(s) in the second cell 122, until for example the reception of a Timing Advance Command MAC Control Element from the second RNN 120 confirms that the TA value used by the wireless device 130 is a correct assumption. The timing Advance Command MAC Control Element may be a Timing Advance adjustment instruction. Alternatively, the second RNN 120 may provide the wireless device 130 with another, correct TA value through the Timing Advance Command MAC Control Element. Optionally, a lack of a Timing Advance Command MAC Control Element in the first downlink MAC transmission may also be interpreted as a confirmation that the TA value the wireless device 130 is using is correct or at least good enough. By the expression "that the TA value is at least good enough" when used herein is meant that uplink transmissions by the wireless device using such a TA value will not degrade the system performance above a threshold, e.g. not result in interference above a certain threshold, and will not result in failure to correctly receive the transmission at the RNN, e.g. the eNB in LTE. Note that the use of a guard time as a safety margin still assumes that the wireless device 130 uses a TA value initiated prior to the first uplink transmission in the second cell 122, but that the wireless device 130 does not utilize the full transmission resource, leaving the last part in the time domain of the transmission resource unused. This initial TA value may be initiated by the wireless device 130 based on more or less explicit information or instruction from the wireless communications network 100, e.g. to use T_{A} = 0 or a very small TA value such as T_{A} ≤ 2×16×Tₛ. A prerequisite for this scheme is that the wireless device 130 is informed of which TA value that it should use before its initial access to the second cell 122. TA value initiation may be carried out in several ways. For example, the wireless device 130 may, upon TA group creation, initiate the associated TA value, e.g. to zero. However, TA value initiation will not be described in more detail in this document.

As previously mentioned, together with the implicit or explicit information of the configured TA value to use, the wireless device 130 may be provided with an implicit or explicit instruction to apply a guard time and possibly also the length of the guard time, as well as whether or not to skip the Random Access procedure. By an implicit instruction is meant that the wireless device 130 assumes whether or not to use a guard time from the information of which TA value it should use. The information and/or instruction may be provided to the wireless device 130 in several ways. Below, seven exemplifying ways will be described in more detail.

In a first exemplifying way, the information and/or instruction may be provided to the wireless device 130 by means of the system information in the first cell 112, wherein the initial access information, such as configured TA value, e.g. T_{A} = 0 or a T_{A} ≤ 2×16×Tₛ, and possible guard time, is associated with an identity of the concerned small cell, e.g. as a part of a neighbor cell list. The indication in the neighbor cell list may also be implicit in the form of a Tracking Area Code of the neighboring small cell within a dedicated range.

In a second exemplifying way, the information and/or instruction may be provided to the wireless device 130 by means of a neighbor cell list or a measurement target cell list sent to the wireless device 130 from the first RNN 110. This may be used in parallel with the system information method. In some embodiments, this message may override any different information in the system information.

In a third exemplifying way, the information and/or instruction may be provided to the wireless device 130 by means of a message ordering the wireless device 130 to execute the handover, such as a handover command like message, e.g. in the form of a RRCConnectionReconfiguration RRC message containing a MobilityControllnfo IE, see 3GPP TS 36.331 V11.5.0, "3rd Generation Partnership Project; Technical Specification Group Radio Access Network; Evolved Universal Terrestrial Radio Access (E-UTRA); Radio Resource Control (RRC); Protocol specification (Release 11)", September 2013. This may be used in parallel with the system information method. In some embodiments, this message may override any different information in the system information.

In a fourth exemplifying way, the information and/or instruction may be provided to the wireless device 130 by means of a message configuring the wireless device 130 with additional radio resources. For example, in the concepts of Dual Connectivity and Carrier Aggregation the network may configure the wireless device 130 to utilize multiple carriers. It would be possible that the instruction(s) are provided in the configuration message or messages related to Dual Connectivity and/or Carrier Aggregation, e.g. an RRCConnectionReconfiguration RRC message. This may be used in parallel with the system information method, wherein this message may override any different information in the system information.

In a fifth exemplifying way, the information and/or instruction may be provided to the wireless device 130 by means of a special kind of Timing Advance instruction from the first RNN 110 on the MAC protocol layer, e.g. a special indication and/or a new field in a Timing Advance Command MAC Control Element. This may be used in parallel with the system information method. In some embodiments, this message may override any different information in the system information.

In a sixth exemplifying way, the information and/or instruction may be provided to the wireless device 130 by means of a special kind of Timing Advance instruction from the second RNN 120 on the MAC protocol layer, e.g. a special indication and/or a new Information Element (IE) in a Timing Advance Command MAC Control Element. This may be used in parallel with the system information method. In some embodiments, this message may override any different information in the system information.

In a seventh exemplifying way, the information and/or instruction may be provided to the wireless device 130 by means of the system information in the second cell 122, explicit information or implicit, e.g. in the form of a Tracking Area Code within a dedicated range. This alternative may be less preferred, since it requires that the wireless device 130 acquire the system information in the second cell 122 prior to performing handover to the second cell 122, e.g. in conjunction with measurements the wireless device 130 performs on the small cell's downlink transmissions.

Hence, in all the above exemplifying methods, the configured TA information may optionally be accompanied by an indication of a guard time, e.g. a safety guard time, to be used by the wireless device 130 for the initial uplink transmission in the second cell 122 when the RA procedure towards the second RNN 120 is skipped.

Which length of the guard time is suitable depends on the distance from the wireless device 130 to a receiving antenna of the second RNN 120 where a longer wireless device to antenna distance deems a longer guard time suitable. The wireless communications network 100 may know a suitable guard time length based on information about the coverage of the second cell 122. If there is a risk that one or more other wireless devices far away from the second RNN's 120 antenna get associated with the second cell 122, then a large guard time is needed. However, if there is no risk that one or more wireless devices far away from the antenna are associated with the second cell 122, then no, or a small, guard time may be used. A suitable guard time depends on the propagation delay in a cell. For example, in a cell with X seconds propagation delay, the guard time could be set to X seconds. Further, one TA step in LTE (which is 16 × Tₛ is the basic adjustment step of the Timing Advance and Tₛ is the basic time unit of LTE (Tₛ = 1/(15000 × 2048) ≈ 32.,55 nanoseconds), i.e. 16 × Tₛ = 16/(15000 × 2048) ≈ 520 nanoseconds) compensates for -70 meters (one way) propagation delay. Furthermore, a small cell may have a coverage (propagation delay) of a few 10's of meters, a larger cell may have a coverage (propagation delay) of 100's of meters, and a very large cell may have a coverage (propagation delay) of all the way up to 100 km. Thus, a large guard time may be exemplified as 6 microseconds and a small guard time may be exemplified as 1 microsecond.

The wireless communications network 100 may be aware of the coverage of a network node, e.g. the first and/or second RNN, for example by configuration where the network operator has configured the wireless communications network 100 with suitable settings concerning guard times. Other alternatives also exist for how the wireless communications network 100 acquires information about suitable guard times, such as from Minimization of Drive Tests (MDT) and/or Self-organizing Network (SON) features. This is described e.g. in 3GPP TS 37.320 V11.3.0 ("3rd Generation Partnership Project; Technical Specification Group Radio Access Network; Universal Terrestrial Radio Access (UTRA) and Evolved Universal Terrestrial Radio Access (E-UTRA); Radio measurement collection for Minimization of Drive Tests (MDT); Overall description; Stage 2 (Release 11)", March 2013), 3GPP TS 32.500 V11.1.0 ("3rd Generation Partnership Project; Technical Specification Group Services and System Aspects; Telecommunication Management; Self-Organizing Networks (SON); Concepts and requirements (Release 11)", December 2011), and in 3GPP TS 36.902 V9.3.1 ("3rd Generation Partnership Project; Technical Specification Group Radio Access Network; Evolved Universal Terrestrial Radio Access Network (E-UTRAN); Self-configuring and Self-Optimizing Network (SON) use cases and solutions (Release 9)", March 2011).

From MDT reports the first RNN 110 may become aware of coverage holes or coverage dips in its own cell(s), which may cause handovers to the small cell, e.g. the second cell 122, at a longer distance than usual. When leveraging SON features, the same or similar input may be used as for certain SON features, e.g. SON features for adjusting handover thresholds, DL transmission power and antenna tilt. This self-tuning of the guard time may effectively become a SON feature in itself. Other possible means for acquiring information from which suitable guard times may be derived comprise data in the Mobility Information IE in Handover Request X2AP messages at handovers from the second RNN 120 of the small cell to the first RNN 110, positioning of wireless devices in handover situations or situations of poor coverage, such as using a Global Positioning System (GPS), triangulation methods or T_{A} + Angle of Arrival measurements. Another attractive method would be to introduce means for the second RNN 120, e.g. the pico eNB/Secondary eNB, to report measurements of the reception timing for initial UL transmissions for wireless devices handed over to the second RNN 120. This type of information may be comprised in the Mobility Change Request X2AP message from the second RNN 120 to the first RNN 110 or a new X2AP message may be introduced for this purpose. X2AP, which stands for X2 Application Protocol, is the Application Protocol (AP) used in the interface between two eNBs (i.e. the X2 interface), e.g. between the first RNN 110 and the second RNN 120.

It would also be possible that the guard time is specified in the standard and hardcoded in the wireless device 130. It may be so that the wireless device 130 uses this specified guard time only as a default guard time and if the wireless device 130 has received a guard time from the wireless communications network 100, the wireless device 130 applies the network indicated guard time. That is, the wireless device 130 may give higher priority to the network indicated guard time compared to the default guard time specified in the standard. The wireless communications network 100 may then determine whether the standardized guard time is suitable and if so, not indicate a guard time to the wireless device 130, in which case the wireless device 130 would apply the standardized guard time. However, if the wireless communications network 100 has determined that the standardized guard time is not suitable in a situation, the wireless communications network 100 may indicate to a wireless device 130 another guard time which the wireless device 130 may then apply.

### Resource allocation

Some embodiments herein relate to the allocation of uplink transmission resources for the wireless device's 130 initial transmission in the second cell 122. Some different approaches exists and will be described below with reference to a first, a second and a third exemplifying approach, respectively. However, it should be understood that the second RNN 120, in some way, always is involved in the allocation of transmission resources in its cell(s), since the second RNN 120 "owns" its own radio resources. The second RNN 120 may itself directly inform the wireless device 130 of the resource allocation or delegate to the first RNN 110 to inform the wireless device 130 about the resource allocation.

In the first exemplifying approach, the wireless device 130 is allocated uplink transmission resources in advance, which uplink transmission resources are to be used for transmission to the second RNN 120 in the second cell 122. In some embodiments, the wireless device 130 is proactively allocated uplink transmission resources.

This may be performed from the second RNN 120 to the first RNN 110 and then to the wireless device 130, e.g. in the message configuring the wireless device 130 with RRC configuration suitable for the second cell 122, e.g. a handover command like message, e.g. in the shape of an RRCConnectionReconfiguration RRC message in LTE.

Alternatively, this may be performed through an unsolicited uplink transmission resource allocation, e.g. an uplink grant without a preceding scheduling request, from the second RNN 120 to the wireless device 130.

In the above-mentioned two cases, the wireless device 130 may transmit a Buffer Status Report (BSR) indicating empty uplink transmission buffer(s), if it does not have any other uplink data to transmit.

Yet another alternative is that the first RNN 110 sends an uplink transmission resource allocation, e.g. an uplink grant in response to a scheduling request from the wireless device 130.

In the second exemplifying approach, the wireless device 130 is not allocated uplink transmission resources in advance, which uplink transmission resources are to be used for transmission to the second RNN 120 in the second cell 122.

In such a case, the wireless device 130 may send a scheduling request in the second cell 122 to the second RNN 120 in order to be allocated uplink transmission resources when needed. If the RA procedure is to be skipped in the second cell 122, this method requires that the wireless device 130 is configured with Physical Uplink Control Channel (PUCCH) resources for transmission of scheduling requests in the second cell 122. This may be performed in the message configuring the wireless device 130 with RRC configuration suitable for the second cell 122, e.g. a handover command like message, e.g. in the shape of an RRCConnectionReconfiguration RRC message in LTE.

In the third exemplifying approach, the wireless device 130 is selectively allocated uplink transmission resources to the second RNN 120 in the second cell 122. In some embodiments, the wireless device 130 is proactively and selectively allocated uplink transmission resources to be used for transmission to the second RNN 120 in the second cell 122. Further, the wireless device 130 may selectively be allocated uplink transmission resources based on the first RNN's 110 knowledge about the status of the wireless device's 130 transmission buffer(s). That is based on possible pending uplink data in the wireless device 130.

As a first example, the first RNN 110 may be aware of the status of the wireless device's 130 uplink transmission buffer(s) based on previous BSR(s) transmitted from the wireless device 130. In some embodiments, the first RNN 110 is aware of the status of the wireless device's 130 uplink transmission buffer(s) based on a BSR transmitted from the wireless device 130 to the first RNN 110 in the MAC PDU that contains the MeasurementReport RRC message that includes the measurement report that triggers the handover decision. This is described in more detail in 3GPP TS 36.321 V11.3.0, "3rd Generation Partnership Project; Technical Specification Group Radio Access Network; Evolved Universal Terrestrial Radio Access (E-UTRA); Medium Access Control (MAC) protocol specification (Release 11)", June 2013, which describes the MeasurementReport RRC message that comprises the measurement report that triggers the handover decision. Further, in some embodiments, the first RNN 110 is aware of the status of the wireless device's 130 uplink transmission buffer(s) based on a pending Scheduling Request from the wireless device 130 in the first cell 112.

As a second example, the first RNN 110 may inform the wireless device 130 of the transmission resource allocation in the second cell 122. This may be performed in the message configuring the wireless device 130 with RRC configuration suitable for the second cell 122, such as in a handover command like message, e.g. in the shape of an RRCConnectionReconfiguration RRC message in LTE. For example, the first RNN 110 may first inform the second RNN 120 of the pending uplink data in the wireless device 130 and the second RNN 120 may respond with an indication of the resources to be allocated to the wireless device 130. This information exchange may take place in messages involved in the handover procedure, e.g. messages like the currently used X2AP messages; HANDOVER REQUEST and HANDOVER REQUEST ACKNOWLEDGEMENT.

As a third example, the wireless device 130 is informed of the transmission resource allocation by the second RNN 120 through an unsolicited uplink transmission resource allocation from the second RNN 120 to the wireless device 130. The unsolicited uplink transmission resource allocation may for example be an uplink grant without a preceding scheduling request. For example, the second RNN 120 is informed of the pending uplink data in the wireless device 130 by the first RNN 110 in a message involved in the handover procedure, e.g. a message like the currently used X2AP message HANDOVER REQUEST.

When using the word "comprise" or "comprising" it shall be interpreted as nonlimiting, i.e. meaning "consist at least of".

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments herein being defined by the following claims.

## Claims

1. A method in a wireless communication network comprising a first Radio Network Node, RNN, (110) and a second Radio Network Node, RNN 120, for assisting a wireless device (130) to perform an uplink transmission to the second RNN (120), wherein the first RNN (110), the second RNN (120) and the wireless device (130) are operated in the wireless communications network (100), wherein the first RNN (110) is configured to serve the wireless device (130) when located in a first cell (112) and the second RNN (120) is configured to serve the wireless device (130) when located in a second cell (122), wherein the second cell (122) has a size that is below a threshold and arranged to at least partly overlap the first cell (112), and wherein the method comprises:
- *triggering (201,301),* by a specifc RNN, the specific RNN being the first RNN or the second RNN, the wireless device (130) to perform the uplink transmission using a configured Timing Advance, TA, value and a guard time without performing a preceding random access procedure in the second cell (122) towards the second RNN (120), wherein the triggering (201,301) further comprises:
- *transmitting,* to the wireless device (130), by *the specific RNN,* information relating to one or more resources allocated, for the uplink transmission, to *the second RNN;*
- *transmitting,* to the wireless device (130), *by the specific RNN,* configuration information that is configured to instruct the wireless device (130) to use the configured TA value and the guard time when performing the uplink transmission;
- *receiving (202,701),* by the wireless device (130), a trigger configured to trigger the wireless device (130) to perform the uplink transmission using a configured Timing Advance, TA, value and a guard time, wherein the receiving (202,701) further comprises receiving configuration information that is configured to instruct the wireless device (130) to use the configured TA value and the guard time when performing the uplink transmission; and
- *performing (206,703),* by the wireless device (130), by means of the configured TA value and the guard time, the uplink transmission to the second RNN (120) without performing a preceding random access procedure in the second cell (122) towards the second RNN (120).

2. The method of claim 1, wherein the transmitting further comprises:
- transmitting system information comprising the configured TA value and/or the guard time.

3. The method of any of claims 1-2, wherein the transmitting further comprises:
- transmitting a cell list comprising the configured TA value and/or the guard time for one or more of cells of the cell list, wherein the cell list is a neighbor cell list or a measurement target list.

4. The method of any of claims 1-2, wherein the transmitting further comprises:
- transmitting the configured TA value and/or the guard time in a message ordering the wireless device to perform handover to the second RNN (120) or to add the second cell to the wireless device's set of service cells.

5. The method of any of claims 1-2, wherein the transmitting further comprises:
- transmitting the initial TA value and/or the guard time in a message configuring the wireless device (130) with additional radio resources for the uplink transmission to the second RNN (120).

6. The method of any of claims 1-5, further comprising:
- *transmitting (204,302),* to the wireless device (130), information relating to one or more resources allocated for the uplink transmission for the uplink transmission to the second RNN (120).

7. A first Radio Network Node, RNN, (110) for assisting a wireless device (130) to perform an uplink transmission to a second RNN (120), wherein the first RNN (110), the second RNN (120) and the wireless device (130) are operated in a wireless communications network (100), wherein the first RNN (110) is configured to serve the wireless device (130) when located in a first cell (112) and the second RNN (120) is configured to serve the wireless device (130) when located in a second cell (122), wherein the second cell (122) has a size that is below a threshold and arranged to at least partly overlap the first cell (112), and wherein the first RNN (110) comprises means adapted to:
- *trigger* the wireless device (130) to perform the uplink transmission using a configured Timing Advance, TA, value and a guard time without performing a preceding random access procedure in the second cell (122) towards the second RNN (120), wherein the means adapted to trigger further is adapted to:
- *transmit,* to the wireless device (130), information relating to one or more resources allocated, for the uplink transmission, to *the second RNN; and*
- *transmit,* to the wireless device (130), configuration information that is configured to instruct the wireless device (130) to use the configured TA value and the guard time when performing the uplink transmission.

8. A second Radio Network Node, RNN, (120) for assisting a wireless device (130) to perform an uplink transmission to the second RNN (120), wherein a first Radio Network Node, RNN, the second RNN (120) and the wireless device (130) are operated in a wireless communications network (100), wherein the first RNN is configured to serve the wireless device when located in a first cell and the second RNN (120) is configured to serve the wireless device (130) when located in a second cell (122), wherein the second cell (122) has a size that is below a threshold and arranged to at least partly overlap the first cell (112), and wherein the second RNN (120) comprises means adapted to:
- *trigger* the wireless device (130) to perform the uplink transmission using a configured Timing Advance, TA, value and a guard time without performing a preceding random access procedure in the second cell (122) towards the second RNN (120), wherein the means adapted to trigger further is adapted to:
- *transmit,* to the wireless device (130) information relating to one or more resources allocated, for the uplink transmission, to *the second RNN; and*
- *transmit* to the wireless device (130), configuration information that is configured to instruct the wireless device (130) to use the configured TA value and the guard time when performing the uplink transmission.

9. The method of claim 1, wherein the *receiving (202,701)* further comprises:
- receiving system information comprising the configured TA value and/or the guard time.

10. The method of claim 1, wherein the *receiving (202,701)* further comprises:
- receiving a cell list comprising the configured TA value and/or the guard time for one or more cells of the cell list, wherein the cell list is a neighbor cell list or a measurement target list.

11. The method of claim 1, wherein the *receiving (202,701)* further comprises:
- receiving the configured TA value and/or the guard time in a message ordering the wireless device (130) to perform handover to the secondRNN (120).

12. The method of claim 1, wherein the *receiving (202,701)* further comprises:
- receiving the configured TA value and/or the guard time in a message configuring the wireless device (130) with additional radio resources for the uplink transmission to the second RNN (120).

13. The method of claim 1, further comprising:
- *receiving (205,702)* information relating to one or more resources allocated for the uplink transmission to the second RNN (120).

14. A wireless device (130) to perform an uplink transmission to a second RNN (120), wherein the second RNN (120) and the wireless device (130) are operated in a wireless communications network (100), wherein the second RNN (120) is configured to serve the wireless device (130) when located in a second cell (122), wherein the second cell (122) has a size that is below a threshold and arranged to at least partly overlap a first cell (112) served by a first RNN (110) comprised in the wireless communications network (100), and wherein the wireless device (130) comprises means adapted to:
- *receive* a trigger configured to trigger the wireless device (130) to perform the uplink transmission using a configured Timing Advance, TA, value and a guard time, wherein the means adapted to receive further is adapted to receive configuration information that is configured to instruct the wireless device (130) to use the configured TA value and the guard time when performing the uplink transmission;
- *receive* information related to one or more resources allocated, for the uplink transmission, to the second RNN (120); and
- *perform,* by means of the configured TA value and the guard time, the uplink transmission to the second RNN (120) without performing a preceding random access procedure in the second cell (122) towards the second RNN (120).

## Patentansprüche

1. Verfahren in einem drahtlosen Kommunikationsnetz, das einen ersten Funknetzknoten, RNN, (110) und einen zweiten Funknetzknoten, RNN 120, umfasst, um eine drahtlose Vorrichtung (130) bei der Durchführung einer Uplink-Übertragung an den zweiten RNN (120) zu unterstützen, wobei der erste RNN (110), der zweite RNN (120) und die drahtlose Vorrichtung (130) in dem drahtlosen Kommunikationsnetz (100) betrieben werden, wobei der erste RNN (110) konfiguriert ist, um die drahtlose Vorrichtung (130) zu bedienen, wenn sie sich in einer ersten Zelle (112) befindet, und der zweite RNN (120) konfiguriert ist, um die drahtlose Vorrichtung (130) zu bedienen, wenn sie sich in einer zweiten Zelle (122) befindet, wobei die zweite Zelle (122) eine Größe aufweist, die unter einem Schwellenwert liegt, und so angeordnet ist, dass sie die erste Zelle (112) mindestens teilweise überlappt, und wobei das Verfahren umfasst:
- *Auslösen (201, 301),* durch einen spezifischen RNN, wobei der spezifische RNN der erste RNN oder der zweite RNN ist, dass die drahtlose Vorrichtung (130) die Uplink-Übertragung unter Verwendung eines konfigurierten Zeitvorlaufs-Wertes, TA-Wertes, und einer Schutzzeit durchführt, ohne eine vorherige Direktzugriffsprozedur in der zweiten Zelle (122) in Richtung des zweiten RNN (120) durchzuführen, wobei das Auslösen (201, 301) ferner umfasst:
- *Übertragen,* an die drahtlose Vorrichtung (130), durch *den spezifischen RNN,* von Informationen in Bezug auf eine oder mehrere Ressourcen, die für die Uplink-Übertragung *dem zweiten* RNN zugeordnet sind;
- *Übertragen,* an die drahtlose Vorrichtung (130), *durch den spezifischen RNN,* von Konfigurationsinformationen, die konfiguriert sind, um die drahtlose Vorrichtung (130) anzuweisen, den konfigurierten TA-Wert und die Schutzzeit beim Durchführen der Uplink-Übertragung zu verwenden;
- *Empfangen* (202, 701), durch die drahtlose Vorrichtung (130), eines Auslösers, der konfiguriert ist, um auszulösen, dass die drahtlose Vorrichtung (130) die Uplink-Übertragung unter Verwendung eines konfigurierten Zeitvorlaufs-Wertes, TA-Wertes, und einer Schutzzeit durchführt, wobei das Empfangen (202, 701) ferner das Empfangen von Konfigurationsinformationen umfasst, die konfiguriert sind, um die drahtlose Vorrichtung (130) anzuweisen, den konfigurierten TA-Wert und die Schutzzeit zu verwenden, während die Uplink-Übertragung durchgeführt wird; und
- *Durchführen (206, 703),* durch die drahtlose Vorrichtung (130), mittels des konfigurierten TA-Wertes und der Schutzzeit, der Uplink-Übertragung an den zweiten RNN (120) ohne Durchführen einer vorherigen Direktzugriffsprozedur in der zweiten Zelle (122) in Richtung des zweiten RNN (120).

2. Verfahren nach Anspruch 1, wobei das Übertragen ferner umfasst:
- Übertragen von Systeminformationen, die den konfigurierten TA-Wert und/oder die Schutzzeit umfassen.

3. Verfahren nach einem der Ansprüche 1 bis 2, wobei das Übertragen ferner umfasst:
- Übertragen einer Zellliste, die den konfigurierten TA-Wert und/oder die Schutzzeit für eine oder mehrere der Zellen der Zellliste umfasst, wobei die Zellliste eine Nachbarzellliste oder eine Messungszielliste ist.

4. Verfahren nach einem der Ansprüche 1 bis 2, wobei das Übertragen ferner umfasst:
- Übertragen des konfigurierten TA-Wertes und/oder der Schutzzeit in einer Nachricht, welche die drahtlose Vorrichtung auffordert, eine Übergabe an den zweiten RNN (120) durchzuführen oder die zweite Zelle zu dem Satz von Dienstzellen der drahtlosen Vorrichtung hinzuzufügen.

5. Verfahren nach einem der Ansprüche 1 bis 2, wobei das Übertragen ferner umfasst:
- Übertragen des anfänglichen TA-Wertes und/oder der Schutzzeit in einer Nachricht, welche die drahtlose Vorrichtung (130) mit zusätzlichen Funkressourcen für die Uplink-Übertragung an den zweiten RNN (120) konfiguriert.

6. Verfahren nach einem der Ansprüche 1 bis 5, ferner umfassend:
- *Übertragen (204, 302),* an die drahtlose Vorrichtung (130), von Informationen in Bezug auf eine oder mehrere Ressourcen, die für die Uplink-Übertragung für die Uplink-Übertragung dem zweiten RNN (120) zugeordnet sind.

7. Erster Funknetzknoten, RNN, (110), um eine drahtlose Vorrichtung (130) bei der Durchführung einer Uplink-Übertragung an einen zweiten RNN (120) zu unterstützen, wobei der erste RNN (110), der zweite RNN (120) und die drahtlose Vorrichtung (130) in einem drahtlosen Kommunikationsnetz (100) betrieben werden, wobei der erste RNN (110) konfiguriert ist, um die drahtlose Vorrichtung (130) zu bedienen, wenn sie sich in einer ersten Zelle (112) befindet, und der zweite RNN (120) konfiguriert ist, um die drahtlose Vorrichtung (130) zu bedienen, wenn sie sich in einer zweiten Zelle (122) befindet, wobei die zweite Zelle (122) eine Größe aufweist, die unter einem Schwellenwert liegt, und so angeordnet ist, dass sie die erste Zelle (112) mindestens teilweise überlappt, und wobei der erste RNN (110) Mittel umfasst, die angepasst sind zum:
- *Auslösen,* dass die drahtlose Vorrichtung (130) die Uplink-Übertragung unter Verwendung eines konfigurierten Zeitvorlaufs-Wertes, TA-Wertes, und einer Schutzzeit durchführt, ohne eine vorhergehende Direktzugriffsprozedur in der zweiten Zelle (122) in Richtung des zweiten RNN (120) durchzuführen, wobei das Mittel, das zum Auslösen angepasst ist, ferner angepasst ist zum:
- *Übertragen,* an die drahtlose Vorrichtung (130), von Informationen in Bezug auf eine oder mehrere Ressourcen, die für die Uplink-Übertragung *dem zweiten RNN* zugeordnet sind; und
- *Übertragen,* an die drahtlose Vorrichtung (130), von Konfigurationsinformationen, die konfiguriert sind, um die drahtlose Vorrichtung (130) anzuweisen, den konfigurierten TA-Wert und die Schutzzeit beim Durchführen der Uplink-Übertragung zu verwenden.

8. Zweiter Funknetzknoten, RNN, (120), um eine drahtlose Vorrichtung (130) bei der Durchführung einer Uplink-Übertragung an den zweiten RNN (120) zu unterstützen, wobei ein erster Funknetzknoten, RNN, der zweite RNN (120) und die drahtlose Vorrichtung (130) in einem drahtlosen Kommunikationsnetz (100) betrieben werden, wobei der erste RNN konfiguriert ist, um die drahtlose Vorrichtung zu bedienen, wenn sie sich in einer ersten Zelle befindet, und der zweite RNN (120) konfiguriert ist, um die drahtlose Vorrichtung (130) zu bedienen, wenn sie sich in einer zweiten Zelle (122) befindet, wobei die zweite Zelle (122) eine Größe aufweist, die unter einem Schwellenwert liegt, und so angeordnet ist, dass sie die erste Zelle (112) mindestens teilweise überlappt, und wobei der zweite RNN (120) Mittel umfasst, die angepasst sind zum:
- *Auslösen,* dass die drahtlose Vorrichtung (130) die Uplink-Übertragung unter Verwendung eines konfigurierten Zeitvorlaufs-Wertes, TA-Wertes, und einer Schutzzeit durchführt, ohne eine vorhergehende Direktzugriffsprozedur in der zweiten Zelle (122) in Richtung des zweiten RNN (120) durchzuführen, wobei das Mittel, das zum Auslösen angepasst ist, ferner angepasst ist zum:
- *Übertragen,* an die drahtlose Vorrichtung (130), von Informationen in Bezug auf eine oder mehrere Ressourcen, die für die Uplink-Übertragung *dem zweiten RNN* zugeordnet sind; *und*
- *Übertragen,* an die drahtlose Vorrichtung (130), von Konfigurationsinformationen, die konfiguriert sind, um die drahtlose Vorrichtung (130) anzuweisen, den konfigurierten TA-Wert und die Schutzzeit beim Durchführen der Uplink-Übertragung zu verwenden.

9. Verfahren nach Anspruch 1, wobei das Empfangen (202, 701) ferner umfasst:
- Empfangen von Systeminformationen, die den konfigurierten TA-Wert und/oder die Schutzzeit umfassen.

10. Verfahren nach Anspruch 1, wobei das *Empfangen (202, 701)* ferner umfasst:
- Empfangen einer Zellliste, die den konfigurierten TA-Wert und/oder die Schutzzeit für eine oder mehrere Zellen der Zellliste umfasst, wobei die Zellliste eine Nachbarzellliste oder eine Messungszielliste ist.

11. Verfahren nach Anspruch 1, wobei das *Empfangen (202, 701)* ferner umfasst:
- Empfangen des konfigurierten TA-Wertes und/oder der Schutzzeit in einer Nachricht, welche die drahtlose Vorrichtung (130) auffordert, eine Übergabe an den zweiten RNN (120) durchzuführen.

12. Verfahren nach Anspruch 1, wobei das *Empfangen (202, 701)* ferner umfasst:
- Empfangen des konfigurierten TA-Wertes und/oder der Schutzzeit in einer Nachricht, welche die drahtlose Vorrichtung (130) mit zusätzlichen Funkressourcen für die Uplink-Übertragung an den zweiten RNN (120) konfiguriert.

13. Verfahren nach Anspruch 1, ferner umfassend:
- *Empfangen (205,* 702) von Informationen in Bezug auf eine oder mehrere Ressourcen, die für die Uplink-Übertragung dem zweiten RNN (120) zugeordnet sind.

14. Drahtlose Vorrichtung (130) zum Durchführen einer Uplink-Übertragung an einen zweiten RNN (120), wobei der zweite RNN (120) und die drahtlose Vorrichtung (130) in einem drahtlosen Kommunikationsnetz (100) betrieben werden, wobei der zweite RNN (120) konfiguriert ist, um die drahtlose Vorrichtung (130) zu bedienen, wenn sie sich in einer zweiten Zelle (122) befindet, wobei die zweite Zelle (122) eine Größe aufweist, die unter einem Schwellenwert liegt, und so angeordnet ist, dass sie eine erste Zelle (112), die durch einen ersten RNN (110) bedient wird, der in dem drahtlosen Kommunikationsnetz (100) umfasst ist, mindestens teilweise überlappt, und wobei die drahtlose Vorrichtung (130) Mittel umfasst, die angepasst sind zum:
- *Empfangen* eines Auslösers, der konfiguriert ist, um auszulösen, dass die drahtlose Vorrichtung (130) die Uplink-Übertragung unter Verwendung eines konfigurierten Zeitvorlaufs-Wertes, TA-Wertes, und einer Schutzzeit durchführt, wobei das Mittel, das zum Empfangen angepasst ist, ferner angepasst ist, um Konfigurationsinformationen zu empfangen, die konfiguriert sind, um die drahtlose Vorrichtung (130) anzuweisen, den konfigurierten TA-Wert und die Schutzzeit beim Durchführen der Uplink-Übertragung zu verwenden;
- *Empfangen* von Informationen in Bezug auf eine oder mehrere Ressourcen, die für die Uplink-Übertragung dem zweiten RNN (120) zugeordnet sind; und
- *Durchführen,* mittels des konfigurierten TA-Wertes und der Schutzzeit, der Uplink-Übertragung an den zweiten RNN (120) ohne Durchführen einer vorherigen Direktzugriffsprozedur in der zweiten Zelle (122) in Richtung des zweiten RNN (120).

## Revendications

1. Procédé dans un réseau de communication sans fil comprenant un premier nœud de réseau radio, RNN (110) et un deuxième nœud de réseau radio, RNN 120, pour aider un dispositif sans fil (130) à mettre en œuvre une transmission en liaison montante vers le deuxième RNN (120), dans lequel le premier RNN (110), le deuxième RNN (120) et le dispositif sans fil (130) sont exploités dans le réseau de communications sans fil (100), dans lequel le premier RNN (110) est configuré pour desservir le dispositif sans fil (130) lorsqu'il est localisé dans une première cellule (112) et le deuxième RNN (120) est configuré pour desservir le dispositif sans fil (130) lorsqu'il est localisé dans une deuxième cellule (122), dans lequel la deuxième cellule (122) a une taille qui est inférieure à un seuil et agencée pour chevaucher au moins partiellement la première cellule (112), et dans lequel le procédé comprend :
- le *déclenchement (201, 301),* par un RNN spécifique, le RNN spécifique étant le premier RNN ou le deuxième RNN, du dispositif sans fil (130) pour mettre en œuvre la transmission en liaison montante en utilisant une valeur d'avance de temporisation, TA, configurée et un temps de garde sans mettre en œuvre une procédure d'accès aléatoire précédente dans la deuxième cellule (122) en direction du deuxième RNN (120), dans lequel le déclenchement (201, 301) comprend en outre :
- la *transmission,* au dispositif sans fil (130), par *le RNN spécifique,* d'informations se rapportant à une ou plusieurs ressources allouées, pour la transmission en liaison montante, vers *le deuxième RNN ;*
- la *transmission,* au dispositif sans fil (130), *par le RNN spécifique,* d'informations de configuration qui sont configurées pour donner pour instruction au dispositif sans fil (130) d'utiliser la valeur TA configurée et le temps de garde lors de la mise en œuvre de la transmission en liaison montante ;
- la *réception (202, 701),* par le dispositif sans fil (130), d'un déclencheur configuré pour déclencher le dispositif sans fil (130) pour mettre en œuvre la transmission en liaison montante en utilisant une valeur d'avance de temporisation, TA, configurée et un temps de garde, dans lequel la réception (202, 701) comprend en outre la réception d'informations de configuration qui sont configurées pour donner pour instruction au dispositif sans fil (130) d'utiliser la valeur TA configurée et le temps de garde lors de la mise en œuvre de la transmission en liaison montante ; et
- la *mise en œuvre (206, 703),* par le dispositif sans fil (130), au moyen de la valeur TA configurée et du temps de garde, de la transmission en liaison montante vers le deuxième RNN (120) sans mettre en œuvre une procédure d'accès aléatoire précédente dans la deuxième cellule (122) en direction du deuxième RNN (120).

2. Procédé selon la revendication 1, dans lequel la transmission comprend en outre :
- la transmission d'informations système comprenant la valeur TA configurée et/ou le temps de garde.

3. Procédé selon l'une quelconque des revendications 1 ou 2, dans lequel la transmission comprend en outre :
- la transmission d'une liste de cellules comprenant la valeur TA configurée et/ou le temps de garde pour une ou plusieurs des cellules de la liste de cellules, dans lequel la liste de cellules est une liste de cellules voisines ou une liste de cibles de mesure.

4. Procédé selon l'une quelconque des revendications 1 ou 2, dans lequel la transmission comprend en outre :
- la transmission de la valeur TA configurée et/ou du temps de garde dans un message ordonnant au dispositif sans fil de mettre en œuvre un transfert vers le deuxième RNN (120) ou d'ajouter la deuxième cellule à l'ensemble de cellules de service du dispositif sans fil.

5. Procédé selon l'une quelconque des revendications 1 ou 2, dans lequel la transmission comprend en outre :
- la transmission de la valeur TA initiale et/ou du temps de garde dans un message configurant le dispositif sans fil (130) avec des ressources radio supplémentaires pour la transmission en liaison montante vers le deuxième RNN (120).

6. Procédé selon l'une quelconque des revendications 1 à 5, comprenant en outre :
- la *transmission (204, 302),* au dispositif sans fil (130), d'informations se rapportant à une ou plusieurs ressources allouées pour la transmission en liaison montante pour la transmission en liaison montante vers le deuxième RNN (120).

7. Premier nœud de réseau radio, RNN (110) pour aider un dispositif sans fil (130) à mettre en œuvre une transmission en liaison montante vers un deuxième RNN (120), dans lequel le premier RNN (110), le deuxième RNN (120) et le dispositif sans fil (130) sont exploités dans un réseau de communications sans fil (100), dans lequel le premier RNN (110) est configuré pour desservir le dispositif sans fil (130) lorsqu'il est localisé dans une première cellule (112) et le deuxième RNN (120) est configuré pour desservir le dispositif sans fil (130) lorsqu'il est localisé dans une deuxième cellule (122), dans lequel la deuxième cellule (122) a une taille qui est inférieure à un seuil et agencée pour chevaucher au moins partiellement la première cellule (112), et dans lequel le premier RNN (110) comprend un moyen conçu pour :
- *déclencher le* dispositif sans fil (130) pour mettre en œuvre la transmission en liaison montante en utilisant une valeur d'avance de temporisation, TA, configurée et un temps de garde sans mettre en œuvre une procédure d'accès aléatoire précédente dans la deuxième cellule (122) en direction du deuxième RNN (120), dans lequel le moyen conçu pour déclencher est en outre conçu pour :
*- transmettre,* au dispositif sans fil (130), des informations se rapportant à une ou plusieurs ressources allouées, pour la transmission en liaison montante, au *deuxième RNN :* et
*- transmettre,* au dispositif sans fil (130), par le RNN spécifique, des informations de configuration qui sont configurées pour donner pour instruction au dispositif sans fil (130) d'utiliser la valeur TA configurée et le temps de garde lors de la mise en œuvre de la transmission en liaison montante.

8. Deuxième nœud de réseau radio, RNN (120) pour aider un dispositif sans fil (130) à mettre en œuvre une transmission en liaison montante vers le deuxième RNN (120), dans lequel un premier nœud de réseau radio, RNN, le deuxième RNN (120) et le dispositif sans fil (130) sont exploités dans un réseau de communications sans fil (100), dans lequel le premier RNN est configuré pour desservir le dispositif sans fil lorsqu'il est localisé dans une première cellule et le deuxième RNN (120) est configuré pour desservir le dispositif sans fil (130) lorsqu'il est localisé dans une deuxième cellule (122), dans lequel la deuxième cellule (122) a une taille qui est inférieure à un seuil et agencée pour chevaucher au moins partiellement la première cellule (112), et dans lequel le deuxième RNN (120) comprend un moyen conçu pour :
- *déclencher le* dispositif sans fil (130) pour mettre en œuvre la transmission en liaison montante en utilisant une valeur d'avance de temporisation, TA, configurée et un temps de garde sans mettre en œuvre une procédure d'accès aléatoire précédente dans la deuxième cellule (122) en direction du deuxième RNN (120), dans lequel le moyen conçu pour déclencher est en outre conçu pour :
- *transmettre,* au dispositif sans fil (130), des informations se rapportant à une ou plusieurs ressources allouées, pour la transmission en liaison montante, au *deuxième RNN* ; et
- *transmettre,* au dispositif sans fil (130), par le RNN spécifique, des informations de configuration qui sont configurées pour donner pour instruction au dispositif sans fil (130) d'utiliser la valeur TA configurée et le temps de garde lors de la mise en œuvre de la transmission en liaison montante.

9. Procédé selon la revendication 1, dans lequel la *réception* (202, 701) comprend en outre :
- la réception d'informations système comprenant la valeur TA configurée et/ou le temps de garde.

10. Procédé selon la revendication 1, dans lequel la *réception (202,* 701) comprend en outre :
- la réception d'une liste de cellules comprenant la valeur TA configurée et/ou le temps de garde pour une ou plusieurs cellules de la liste de cellules, dans lequel la liste de cellules est une liste de cellules voisines ou une liste de cibles de mesure.

11. Procédé selon la revendication 1, dans lequel la *réception (202,* 701) comprend en outre :
- la réception de la valeur TA configurée et/ou du temps de garde dans un message ordonnant au dispositif sans fil (130) de mettre en œuvre un transfert vers le deuxième RNN (120).

12. Procédé selon la revendication 1, dans lequel la *réception (202,* 701) comprend en outre :
- la réception de la valeur TA configurée et/ou du temps de garde dans un message configurant le dispositif sans fil (130) avec des ressources radio supplémentaires pour la transmission en liaison montante vers le deuxième RNN (120).

13. Procédé selon la revendication 1, comprenant en outre :
- la *réception (205,* 702) d'informations se rapportant à une ou plusieurs ressources allouées pour la transmission en liaison montante vers le deuxième RNN (120).

14. Dispositif sans fil (130) pour mettre en œuvre une transmission en liaison montante vers un deuxième RNN (120), dans lequel le deuxième RNN (120) et le dispositif sans fil (130) sont exploités dans un réseau de communications sans fil (100), dans lequel le deuxième RNN (120) est configuré pour desservir le dispositif sans fil (130) lorsqu'il est localisé dans une deuxième cellule (122), dans lequel la deuxième cellule (122) a une taille qui est inférieure à un seuil et agencée pour chevaucher au moins partiellement une première cellule (112) desservie par un premier RNN (110) compris dans le réseau de communications sans fil (100), et dans lequel le dispositif sans fil (130) comprend un moyen conçu pour :
- *recevoir* un déclencheur configuré pour déclencher le dispositif sans fil (130) pour mettre en œuvre la transmission en liaison montante en utilisant une valeur d'avance de temporisation, TA, configurée et un temps de garde, dans lequel le moyen conçu pour recevoir est en outre conçu pour recevoir des informations de configuration qui sont configurées pour donner pour instruction au dispositif sans fil (130) d'utiliser la valeur TA configurée et le temps de garde lors de la mise en œuvre de la transmission en liaison montante ;
- *recevoir* des informations se rapportant à une ou plusieurs ressources allouées, pour la transmission en liaison montante, vers le deuxième RNN (120) ; et
- *mettre en œuvre,* au moyen de la valeur TA configurée et du temps de garde, de la transmission en liaison montante vers le deuxième RNN (120) sans mettre en œuvre une procédure d'accès aléatoire précédente dans la deuxième cellule (122) en direction du deuxième RNN (120).
